# EUROPEAN PATENT SPECIFICATION

(11) **EP 4 402 960 B1**
(45) Date of publication and mention of the grant of the patent: **25.11.2026**
(21) Application number: 22870987.9
(22) Date of filing: 16.09.2022
(51) Int. Cl.: H04W 64/00, H04W 24/02, H04W 16/18, H04W 88/16, H04W 4/02, H04L 12/28, H04L 41/0803, H04B 17/318, E06B 9/00

(54) **DETERMINING PLACEMENT OF AN ARCHITECTURAL COVERING GATEWAY**
BESTIMMUNG DER PLATZIERUNG EINES ARCHITEKTONISCHEN ABDECKUNGSGATEWAYS
DÉTERMINATION DU PLACEMENT D'UNE PASSERELLE DE COUVERTURE ARCHITECTURALE

(30) Priority: 17.09.2021 US 202163245534 P
(43) Date of publication of application: 24.07.2024
(73) Proprietor: Hunter Douglas Inc., New York, NY 10036 (US)
(72) Inventor: FELTEAU, Wesley, New York 10965 (US)
(74) Representative: J A Kemp LLP
(86) International application number: PCT/US2022/076598
(87) International publication number: WO 2023/044447

(56) References cited:
- KR-A- 20050 068 505
- KR-B1- 102 007 487
- US-A1- 2011 291 796
- US-A1- 2019 095 191
- US-A1- 2021 079 724
- US-A1- 2021 079 724
- US-A1- 2021 084 613
- ADIONO TRIO, FERANTI ANINDYA SINANTYA, FUADA SYIFAUL, YUSUF FATHANY MAULANA: "Curtain Control Systems Development on Mesh Wireless Network of the Smart Home", BULLETIN OF ELECTRICAL ENGINEERING AND INFORMATICS, vol. 7, no. 4, 1 December 2018 (2018-12-01), pages 615 - 625, XP093049180, ISSN: 2089-3191, DOI: 10.11591/eei.v7i4.1199

## Description

### CROSS-REFERENCES TO RELATED APPLICATIONS

### BACKGROUND

Architectural structural coverings, such as blinds, shades, shutters, drapes, provide shading and privacy in buildings such as office buildings, multi-unit dwellings, and houses. Some architectural structural coverings may be manually operable (e.g., through use of a lift chord), while other architectural structural coverings may be motorized (e.g., by an electronic motor). Motorized architectural structural coverings can be operated remotely by a user device (e.g., a remote control, mobile device, keypad). However, it is often difficult to connect the architectural structural coverings to a data network such that they can be remotely connected. Typically, this process is done by trial and error. This process is made even more difficult when, during the installation, no data network is available or access thereto is not provided to a device of an installer.

Relevant disclosures in this technical field are: US 2019/095191 A1, US 2021/084613 A1, US 2021/079724 A1.

### BRIEF DESCRIPTION OF THE DRAWINGS

Non-limiting and non-exhaustive examples are described with reference to the following figures.
FIG. 1 illustrates a perspective view of an exemplary architectural structural covering in an open and extended configuration.
FIG. 2 illustrates a block diagram of an exemplary architectural structural covering controller of the architectural structural covering shown in FIG. 1.
FIG. 3 illustrates an exemplary architectural structural covering system in a use-based environment.
FIG. 4 illustrates exemplary stages for configuring and using architectural structural coverings.
FIG. 5 illustrates an exemplary collection of proximity information.
FIG. 6 illustrates exemplary user interface functionalities available at a device of an installer.
FIG. 7 illustrates exemplary interactions of a device with gateways and a computer system.
FIG. 8 is a flowchart illustrating an exemplary method for determining placement of a gateway.
FIG. 9 illustrates exemplary connections of a gateway with architectural structural coverings, devices, and a computer system.
FIG. 10 illustrates exemplary connections of radios of a gateway with architectural structural coverings.
FIG. 11 is a flowchart illustrating an exemplary method for configuring a gateway.
FIG. 12 is a flowchart illustrating an exemplary method for operating architectural structural coverings via a multi-radio gateway.
FIG. 13 illustrates exemplary connections of a computer system with devices and a gateway.
FIG. 14 illustrates an exemplary assignment of architectural structural coverings to multiple gateways.
FIG. 15 is a flowchart illustrating an exemplary method for a computer system sending a configuration about architectural structural coverings to a gateway.
FIG. 16 is a flowchart illustrating an exemplary method for assigning architectural structural coverings to multiple gateways and monitoring proximity over time.
FIG. 17 illustrates a block diagram of an exemplary operating environment in which one or more of the present examples may be implemented.

### DETAILED DESCRIPTION

Architectural structural coverings are typically placed within a structure, such as, but not limited to, an apartment, a house, a building, etc. The coverings can be connected to a data network via a gateway such to support remote controlling by a user device, such as, but not limited to, a dedicated wireless remote controller, a mobile computing device (e.g., smartphone), a tablet computing device, a laptop computing device, or a desktop computing device, among other electronic devices. The architectural structure coverings can be distributed within different spaces (e.g., rooms, areas, etc.) of the structure, whereas the gateway can be placed at a particular location within the structure. The gateway can wirelessly communicate with the architectural structural coverings. The gateway can be wired (e.g., via an Ethernet cable) or wirelessly connected (e.g., over WiFi) to a home network (e.g., via an access point) that, in turn, is connected to a public network (e.g., the Internet). Hence, placing the gateway at the particular location directly impact the communications with the architectural structural coverings and accessibility thereto by the user device. Many challenges arise with placing and connecting the gateway to the home network.

Conventionally, the gateway can be placed using a trial and error method, where this method may necessitate a data network to be in place. For instance, an installer operating a device can connect to a data network, place the gateway at a location, connect the gateway to the data network, and check connectivity between the gateway and the architectural structural coverings. If the placement is not satisfactory with regard to the connectivity, the gateway can be re-located, and the connectivity checked again. As such, the conventional approach can be time-consuming and may necessitate either a home network to be already set up or, otherwise, the installer to also set up the home network or a temporary data network.

In comparison, embodiments of the present disclosure can substantially reduce the trial and error and may not need a data network to be set up for the placement of the gateway. In an example, the installer's device can send a request to the gateway over a direct connection (e.g., a BLUETOOTH connection). This request can include a structure identifier (e.g., a home ID) that identifies the structure. The gateway can receive signal broadcasts (e.g., BLUETOOTH advertisement beacons) of the architectural structural coverings. These broadcasts can include the structure identifier and covering identifiers of the architectural structural coverings. The gateway can generate proximity metrics based on the signal broadcasts (e.g., received signal strength indicators (RSSIs)) that indicate the proximity of the gateway to each architectural structural covering. Next, the device receives a response to the request that include the proximity metrics and the covering identifiers. Based on a configuration that indicates the installation of the architectural structural coverings in spaces of the structure, the device can generate, per space, an indication of whether the gateway is within a wireless connectivity range of the space and an indication of the connectivity of the gateway to each architectural structural covering installed in the space. Such indications can be presented to the installer via a user interface of the device.

The device can send the proximity information to a computer system, such as a cloud-based server, that then updates the configuration to indicate that the gateway is assigned to the spaces and/or the architectural structural coverings therein. Once the home network is set up and the gateway connected thereto, the gateway can request and receive the configuration from the computer system. Thereafter, the gateway can determine that architectural structural coverings assigned thereto and establish connections (e.g., BLUETOOTH connections) with these architectural structural coverings. Upon receiving a request to operate one or more of the architectural structural coverings, the gateway can generate and send an operation command to the architectural structural covering(s) over the relevant connection(s).

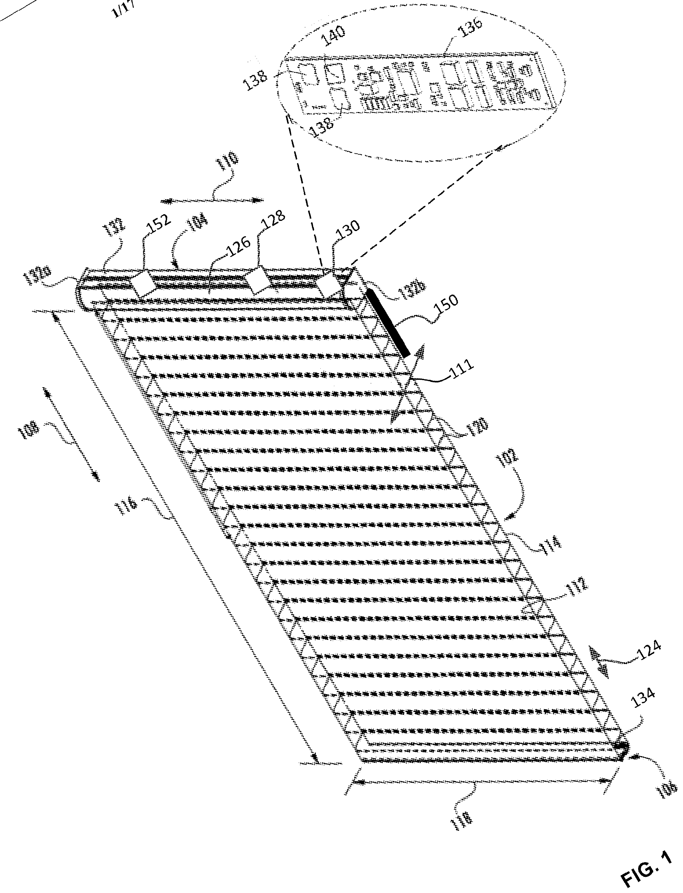

FIG. 1 is a perspective view of an exemplary architectural structural covering 100 in an open and extended configuration. In the interest of brevity, architectural structural covering, such as the architectural structural covering 100, can be referred herein as an architectural covering or a covering. The architectural structural covering 100 includes a shade panel 102 configured to extend vertically between a roller assembly 104 and a bottom rail assembly 106. The shade panel 102 may generally be configured to be moved vertically 108 relative to the roller assembly 104 between a fully lowered or extended position (e.g., as illustrated in FIG. 1) and a fully raised or retracted position (not shown). When the architectural structural covering 100 is in its retracted position, the shade panel 102 is configured to expose an adjacent architectural building (e.g., a window), and when the covering 100 is its extended position, the shade panel 102 is configured to cover the adjacent architectural building. Additionally, the covering 100 is configured to move the shade panel 102 to any number of intermediate positions defined between the fully retracted and fully extended positions so that the shade panel 102 partially covers the adjacent architectural building.

In the example it should be appreciated that, as used herein, the term "vertical" describes the orientation or arrangement of the covering 100 in its extended position (e.g., closed) as indicated by arrow 108 and such as when the covering 100 is mounted for use relative to an adjacent architectural building. Similarly, the term "horizontal" generally describes a direction perpendicular to vertical 108 and that extends side-to-side relative to the covering 100, as illustrated by arrow 110. Further, the term "cross-wise" generally describes a direction perpendicular to both vertical 108 and horizontal 110 and extends front-to-back relative to the covering 100, as illustrated by arrow 111. The various directional references used herein are simply utilized to provide context to the examples shown, and thus, should not be construed as otherwise limiting. For instance, some architectural structure coverings 100 may have its shade panel 102 configured to extend and retract in the horizontal direction.

In some examples, the shade panel 102 includes both a front panel 112 and a back panel 114, with the front and back panels 112 and/or 114 being configured to be arranged generally parallel to each other in the vertical direction 108 and when the shade panel 102 is moved to its fully extended position (shown in FIG. 1). In general, the panels 112 and/or 114 may be formed from any material suitable for use within the disclosed covering 100, such as a textile, a woven and/or non-woven fabric, and/or the like. However, in some examples, one or both of the panels 112 and 114 are formed from a sheer fabric or other suitable material(s) that allows at least a portion of the light hitting the shade panel 102 to pass from one panel to the other. Additionally, it should be appreciated that the front and back panels 112 and/or114 may generally be sized, as required or desired, to use relative to any suitable architectural building. For example, the panels 112 and /or 114 defines a vertical height 116 and/or a horizontal width 118 sufficient to cover a window or other architectural building. In one example, the front and back panels 112 and/or 114 may define substantially the same height 116 and/or width 118 such that the panels 112 and/or 114 are substantially coextensive when the shade panel 102 is in its fully extended position.

The shade panel 102 also includes a plurality of light blocking members or vanes 120 that extend between the front and back panels 112 and/or 114, with the vanes 120 being spaced apart vertically from one another along the vertical height 116 of the shade panel 102. In some examples, each vane 120 is configured to extend the full depth or cross-wise direction 111 between the front and back panels 112 and/or 114. For example, each vane 120 includes a front edge coupled to the front panel 112, and a back edge coupled to the back panel 114, using any suitable means, such as stitching, sticking, adhesives, mechanical fasteners, and/or the like. Additionally, similar to the panels 112 and/or 114, the vanes 120 are formed from any material suitable for use within the disclosed covering 100, such as a textile, a woven and/or non-woven fabric, and/or the like. However, in some examples, the vanes 120 are formed from a material used to form the front and back panels 112 and/or 114. For example, each vane 120 are formed from a light blocking or opaque material or a translucent material.

In operation, when the shade panel 102 is positioned in its fully extended (e.g., closed) (shown in FIG. 1) position, the relative positioning of the front and back panels 112 and/or 114 may be adjusted such that the vanes 120 are tilted to control the amount of light passing through the shade panel 102 (and to allow a view through the shade panel) as required or desired. In some examples, the shade panel 102 is configured such that, when the front and back panels 112 and/or 114 are moved vertically 108 relative to each other (e.g., when the back panel 114 is raised and the front panel 112 is simultaneously lowered, or when the back panel 114 is lowered and the front panel 112 is simultaneously raised), the orientation or tilt angle of the vanes 120 defined between the front and back panels is adjusted. For example, and as illustrated in FIG. 1, the vanes 120 are moved to a substantially horizontal position between the panels 112 and/or 114 such that a vertical light gap 124 is defined between each adjacent pair of vanes 120 and the vanes 120 are in a fully opened configuration. In this "opened" position, light may pass directly through the light gaps 124 defined between the vanes 120. Alternatively, the vanes 120 are tilted to an at least partially overlapping, substantially vertical position between the panels 112 and/or 114 (not shown) such that the vanes 120 are in a fully closed configuration (not shown). In this closed position, the overlapping vanes 120 serve to prevent all or a portion of the light hitting the shade panel 102 from passing there through.

Additionally, the vanes 120 may be tilted to any number of intermediate tilt positions defined between the fully open and closed positions. The orientation of the vanes 120 between and including the fully open and closed position can also be referred to as view through position. It should be appreciated that in one example, the vanes 120 are spaced apart from one another and/or dimensioned such that, when moved to the opened position, the vanes 120 are oriented substantially horizontally 110 between the vertically hanging panels 112 and/or 114, and when moved to the closed position, the shade panel 102 has a collapsed configuration in which both the vanes 120 and the panels 112 and/or 114 hang in a substantially vertical 108 orientation.

The roller assembly 104 of the architectural structure covering 100 includes an operating mechanism 126 configured to support the shade panel 102 and control the extension and retraction of the shade panel 102 between its fully extended and retracted positions. In addition, the operating mechanism 126 controls the tilt of the vanes 120 between their fully opened and closed positions. In some examples, the operating mechanism 126 is covered by a valance or other suitable covering. For instance and as illustrated in FIG. 1, the roller assembly 104 includes a head rail or cover 132 and corresponding endcaps 132a and/or 132b configured to at least partially encase the operating mechanism 126. Moreover, various other components of the roller assembly 104 may also be configured to be housed within the head rail 132 as required or desired. In the example, the operating mechanism 126 includes a single assembly (e.g., a motor 128 and a controller 130) that drives the extension and retraction movements of the shade panel 102 and the opening and closing movements of the vanes 120. In other examples, the operating mechanism 126 may have separate assemblies to drive the extension and retraction movements and the opening and closing movements, respectively. The architectural structural covering 100 may further include a separate back panel 1100, such as a blackout shade, whose extended (closed)/retracted (open) position is controlled separately from covering 100. As shown in FIG. 1, shade 1100 is shown in a partially retracted position. The roller assembly 104 of the architectural structural covering 100 includes a lift assembly 1102 that is configured to control the extension and retraction of the shade 1100 between its extended and retracted positions.

It should be appreciated that one example of an architectural structure covering 100 is illustrated and described in FIG. 1. The architectural structure covering 100, however, may be any type of covering that at least partially covers an architectural element such as a window, a door, an opening, or a wall. In one example, the architectural structure covering 100 can be a shear-type covering. In an aspect, the shade panel has sheer front and back panels that extend and retract, and a plurality of light blocking vanes extending between the panels that tilt to open and close the covering. In another aspect, the shade panel has a single sheer panel that extends and retracts, and a plurality of light-blocking vanes attached to the sheer panel that open and close by sliding one end of the vane relative to the panel. In yet another aspect, the shade panel has a single sheer panel that extends and retracts, and a plurality of light blocking vanes that extend substantially vertically that rotate to open and close.

In another example, the architectural structure covering 100 can be a cellular-type covering. In an aspect, the shade panel has a front and back panel that are connected to each other in a cellular pattern (e.g., a honeycomb-type pattern, a roman-type pattern, etc.) and that extend and retract in an accordion-type motion. This type of cellular pattern creates a layer of insulation (e.g., air) within the covering.

In yet another example, the architectural structure covering 100 can be a roman-type covering. In an aspect, the shade panel has a single panel with a plurality of fabric folds that extends and retracts via a rolling motion (e.g., rolling the folds) or a stacking motion (e.g., stacking the folds). In another aspect, the shade panel has a front and back panel connected in a cellular pattern as described above and that extends and retracts. These panels include excess fabric to generate the roman-type folds when the covering is retracted, and are not necessarily configured to move in an open-and-close direction.

In still another example, the architectural structure covering 100 can be a roller-type covering. In an aspect, the shade panel has a front and back panel connected in a cellular pattern as described above, but extend and retract via a rolling motion. In another aspect, the shade panel has a single panel that extends and retracts in a rolling motion. This type of single panel can be fully or partially light blocking as required or desired, and are not necessarily configured to move in an open-and-closed direction. In other examples, the single panel can be a UV-blocking shade. In yet another aspect, the shade panel has a front and back panel that each have alternating sheer and light blocking bands. In this example, the shade panel is extended and retracted by a rolling motion, and also open and closed by moving the panels relative to one another.

Additionally or alternatively, the architectural structure covering 100 can be a shutter-type covering. In an aspect, the shade panel has a plurality of light-blocking vanes that tilt to open and close the covering, and are not necessarily configured to move in an extended and retracted direction. The architectural structure covering 100 can be a slat-type covering. In an aspect, the shade panel has a plurality of light blocking vanes (e.g., slats) that move relative to each other to extend and retract the covering, and tilt to open and close the covering. The architectural structure covering 100 can also be a vertical-type covering. In an aspect, the shade panel has a plurality of light blocking vanes (e.g., panels or louvers) that move relative to each other in a horizontal direction to extend and retract the covering, and rotate to open and close the covering. Generally, the architectural structure covering 100 can be any type of covering that is enabled to extend and retract and/or open and close as described herein.

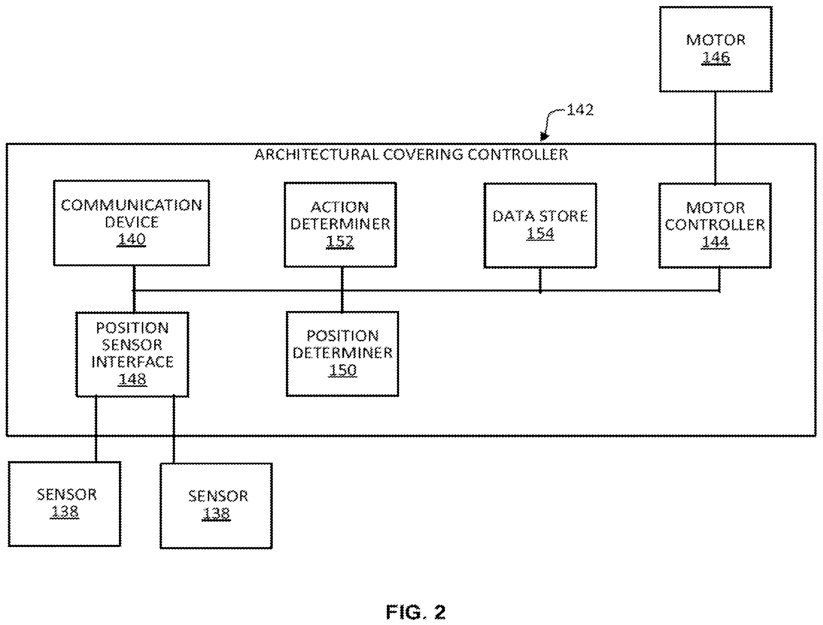

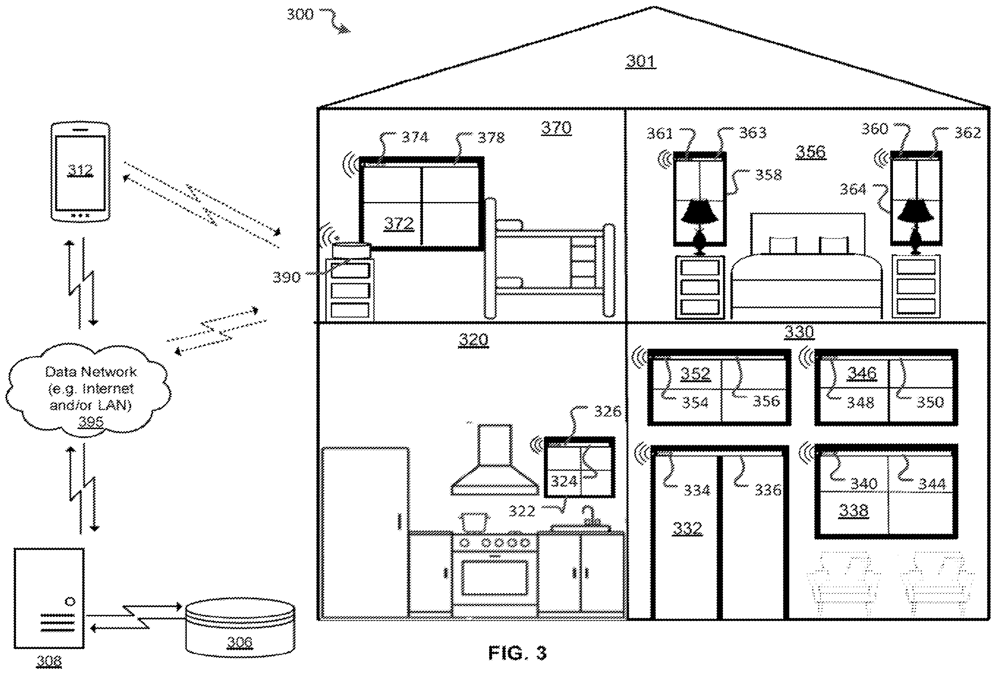

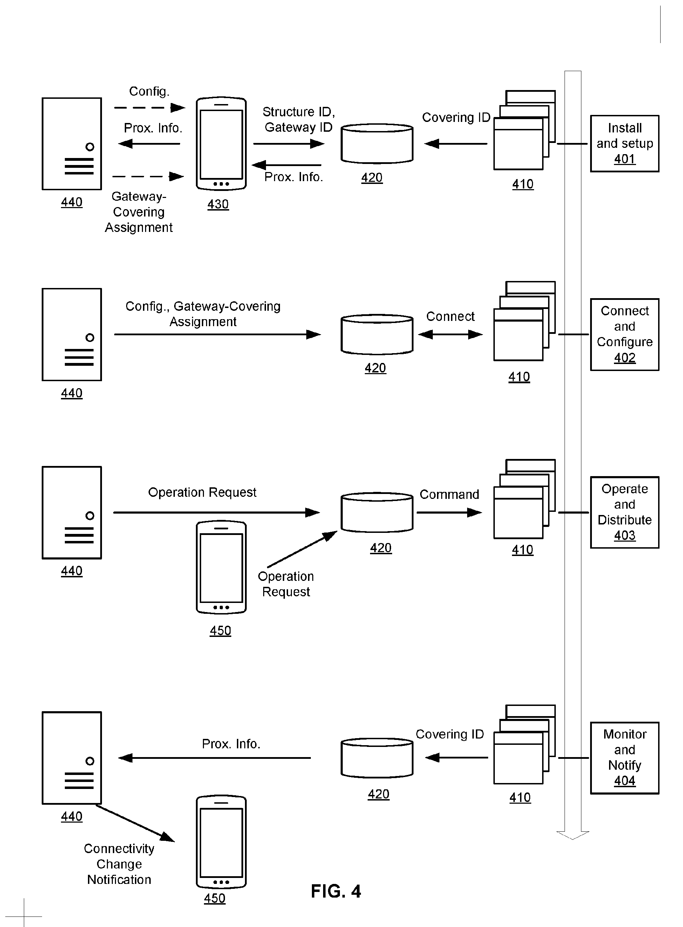

In the example, the operating mechanism 126 is electronic and motorized so that the architectural structure covering 100 is remotely operable as required or desired. The controller 130 of the operating mechanism 126 includes one or more printed circuit boards 136 for operably controlling movement of the shade panel 102 via the motor 128. The circuit board 136 electronically communicates via wired or wireless communication with the motor 128 that drives movement of the shade panel 102 and includes the electrical components (e.g., an architectural structure covering controller such as architectural structure covering controller 142 of FIG. 2) for operating the architectural structure covering 100. The circuit board 136 and/or motor 128 may be powered by a combination of internal and/or external power line connections, battery(ies), fuel cells, solar panels, wind powered generator, and/or any other power source as required or desired. The circuit board 136 includes one or more sensors 138 so as to determine a position of the operating mechanism 126, and thus, a position of the shade panel 102 (e.g., an extended/retracted and/or open/close position). Additionally, the circuit board 136 includes a communication device 140 such as a transmitter, a receiver, a transceiver, and/or other interface to facilitate exchange of data with remote devices (e.g., user device 212 of FIGS. 3 and 4).

In operation, the architectural structural covering 100 receives operational instructions from a remote device, via a gateway, and process and respond to the received instructions accordingly. For example, user devices may control movement of the operating mechanism 126 (shown in FIG. 1) so as to extend or retract and/or open or close the shade panel 102 and control movement of the lift assembly 152 so as to extend or retract the shade panel 152 as required or desired. Furthermore, the architectural structural covering 100 generates a broadcast signal for receipt by the user device so that the user device can determine the type, proximity, identification, and position(s), among other things, of the covering 100 as described further herein.

FIG. 2 is a block diagram of an exemplary architectural structural covering controller 142 of the architectural structural covering 100 (shown in FIG. 1). In the example described below, the architectural structural covering controller 142 is described in connection with the operating mechanism 126 (shown in FIG. 1); however, it is understood that the controller 142 may likewise be used to control any other component of the architectural structural covering 100 as required or desired. In some aspects, the architectural structural covering controller 142 is implemented on the circuit board 136 (shown in FIG. 1).

In the example, the architectural structural covering controller 142 includes a motor controller 144 that controls one or more motors 128 of the assembly based on one or more commands. For example, the motor controller 144 controls the direction of rotation of an output shaft of the motor 128, the speed of the output shaft, and/or other operations of the motor so as to extend and retract and open and close the shade panel 102 (shown in FIG. 1).

The architectural structural covering controller 142 also includes a position sensor interface 148 that receives signals from the position sensors 138. The position sensor 138 includes, for example, a magnetic encoder, a rotary encoder, a gravitational sensor, etc. The position sensor 138 is used to count pulses or rotations of the motor 128, to track the position of a rotating element (e.g., the output shaft, the roller assembly 104 (shown in FIG. 1), etc.) while movement of the covering is being driven (e.g., by a rotating member or any other driving member). The position sensor interface 148 processes the signals from the position sensor 138 and a position determiner 150 determines a position of the architectural structural covering 100 (shown in FIG. 1) based on the processed signal(s) from the position sensor interface 148.

An action determiner 152 is used to determine what action (if any) is to be performed by the motor 128 based on input information from the communication device 140 (e.g., receiving operational instructions from a remote device via a gateway) and/or the position determiner 150. In examples, the communication device is operable to communicate with remote devices via a gateway, wherein the connection with the gateway can use any number of different networks or protocols, such as over Wi-Fi, BLUETOOTH, BLUETOOTH Low Energy, ZIGBEE, etc. For example, if an operational signal is received by the communication device 140 to open the covering, the action determiner 152 sends a signal to the motor controller 144 to activate the motor 128 in an open direction. Similarly, if an operational signal is received by the communication device 140 to close the covering, the action determiner 152 sends a signal to the motor controller 144 to activate the motor 128 in a closed direction. In another example, if an operational signal is received by the communication device 140 to extend the covering, the action determiner 152 sends a signal to the motor controller 144 to activate the motor 128 in an extended direction. Similarly, if an operational signal is received by the communication device 140 to retract the covering, the action determiner 152 sends a signal to the motor controller 144 to activate the motor 128 in a retraction direction. Based on the received operational control signal, the action determiner 152 and the position determiner 150 can selectively use the motor controller 144 to command the motor 128 in one direction or another so that the covering is moved as required or desired.

A data store 154 (e.g., memory) of the architectural structure covering controller 142 is used to store data as required or desired. For example, the data store 154 includes information that is emitted in a broadcast signal from the covering, such as, covering informational data (e.g., a covering identifier), a structure identifier (e.g., an edifice identification number or a home ID), and/or power transmission data.

FIG. 3 illustrates an exemplary architectural structural covering system 300. In the example, the system 300 includes a structure 301 (e.g., an architectural building) separated into spaces 320, 330, 356, and 370 (e.g., architectural areas), each containing one or more windows or doors with one or more architectural structural coverings on each. For example, a first architectural space 320 (e.g., a kitchen) includes a window 322 with a first covering 324; a second architectural space 330 (e.g., a living room) includes a door 332 with second covering 336, a window 338 with third covering 344, a window 346 with fourth covering 350, and a window 352 with fifth covering 356; a third architectural space 356 (e.g., a bedroom) includes a window 358 with sixth covering 363 and a window 364 with seventh covering 362; and an n^{th} architectural space 370 (e.g., a kids room) includes the window 372 with n^{th} covering 378. It should be appreciated that while only eight coverings are illustrated and described, the structure 301 may have any number of coverings as required or desired.

The architectural structural coverings 324, 336, 344, 350, 356, 362, 363, and 378 are communicatively coupled with a gateway 390 using a communication protocol (e.g. Wi-Fi, BLUETOOTH, BLUETOOTH Low Energy, ZIGBEE, etc.). The gateway 390 can be installed within the structure 301, such as within any of the four spaces above or any other space (shown in FIG. 3 as being in the space 370).

A user device 312 is communicatively coupled with the gateway 390 for remote access to the architectural structural coverings 324, 336, 344, 350, 356, 362, 363, and 378. The coverings 324, 336, 344, 350, 356, 362, 363, and 378 can receive instructions from the user device 312 via the gateway 390 and process and respond to the received instructions accordingly. For example, instructions includes to extend or retract and/or open or close the covering. In an example, the user device 312 may be a mobile computing device, a tablet computing device, a laptop computing device, or a desktop computing device, among other electronic devices including remote control devices.

The user device 312 can communicate with the gateway using a number of communication mechanisms, depending on whether the gateway is being set up or has already been set up. In a setup mode, the gateway may not have access to a data network 395 (e.g., such as the Internet, or a local area network (LAN) that the user device 312 is also connected to). In this case, the user device 312 communicates with the gateway 390 over a direct connection (shown with the top two dotted arrows between the user device 312 and the gateway 390). In an operational mode, the gateway has access to the data network (shown with the bottom two dotted arrows between the gateway 390 and the data network 395). In this case, communications from the user device 312 can be sent to the gateway 390 via the data network 395.

In addition to the user device 312, a computer system 308 (such as a local server or a remote server including, but not limited to, a cloud-bases server) can communicate with the gateway 390. Generally, in the setup mode, the compute system 308 may communicate with the user device 312 via the data network 395 or over another data network (e.g., a cellular network), but not with the gateway 390. In this case, configuration information about the architectural structural coverings 324, 336, 344, 350, 356, 362, 363, and 378, and the structure 301 can be exchanged between the user device 312 and the computer system 308. For instance, this information includes a structure identifier of the structure 301; a space identifier per space; a covering identifier per covering; a gateway identifier of the gateway 390; and indicates the distribution of the architectural structural coverings 324, 336, 344, 350, 356, 362, 363, and 378 within the spaces 320, 330, 356, and 370; architectural covering scenes; architectural covering automations, etc. Further, during the setup, the user device 312 can collect proximity information about proximity between the gateway 390 and the architectural structural coverings 324, 336, 344, 350, 356, 362, 363, and 378. The computer system 308 can use this proximity information to determine that the spaces 320, 330, 356, 378 and/or the architectural structural coverings 324, 336, 344, 350, 356, 362, 363, and 378 are to be controlled via the gateway 390. The gateway-to-space assignment or, equivalently, the gateway-to-covering assignment can be stored in the configuration information. A data store 306 (e.g., a database) can be accessible to the computer system 308 and store the configuration information. This configuration information can also contain types and models of the coverings and gateway 390. The display names may be system generated or user generated. If system generated, they may be changed by a user.

In an example, and as further described in the next figures, the proximity information can be generated based on broadcast signals that include the structure identifier and the covering identifiers. In particular, each of the architectural structural coverings 324, 336, 344, 350, 356, 362, 363, and 378 is configured to transmit a broadcast signal 326, 334, 340, 348, 354, 360, 361, and 371 that is received by the gateway. This broadcast signal can be according to the communication protocol that is ultimately used to connect the gateway 390 with the architectural structural coverings 324, 336, 344, 350, 356, 362, 363, and 378 (e.g., a Wi-Fi broadcast, a BLUETOOTH advertisement beacon, etc.) The gateway can generate a proximity metric from each broadcast signal 326, 334, 340, 348, 354, 360, 361, such as the RSSI of this signal, and includes this metric and its association with the relevant covering identifier in the proximity information sent therefrom to the user device 312.

Once the gateway 390 connects to the data network 395, the computer system 308 can send the configuration information, or portion thereof, to the gateway 390 over the data network 395. For example, the computer system 308 can indicate to the gateway 390 that it is assigned controls of the spaces 320, 330, 356, and 370 and/or the architectural structural coverings 324, 336, 344, 350, 356, 362, 363, and 378, and that such controls can be performed according to the architectural covering scenes, architectural covering automations, etc.

FIG. 4 illustrates exemplary stages for configuring and using architectural structural coverings. The stages include an install and setup stage 401, a connect and configure stage 402, an operate and distribute stage 403, and a monitor and notify stage 404. Generally, the install and setup stage 401 involves installing architectural structural coverings in spaces of a structure and placing one more gateways in one or more of the spaces such that the architectural structural coverings are within a connectivity range of the gateway(s). Thereafter, the connect and configure stage 402 involves connecting the gateway(s) to a data network (e.g., a secure LAN that is connected to the Internet) and providing configuration information about the architectural structural coverings and the spaces to the gateway(s). The operate and distribute stage 403 involves operating the architectural structural coverings, where requests for operations can result in the gateway(s) sending the relevant commands to the architectural structural coverings. In parallel to the operate and distribute stage 403, the monitor and notify stage 404 can occur, where the gateway(s) can report proximity information of the architectural structural coverings so that the connectivity ranges and proximities can be monitored over time. Each of these stages is described in more detail herein next. In the interest of clarity of explanation, a single gateway is described. However, the embodiments similarly apply to a larger number of gateways.

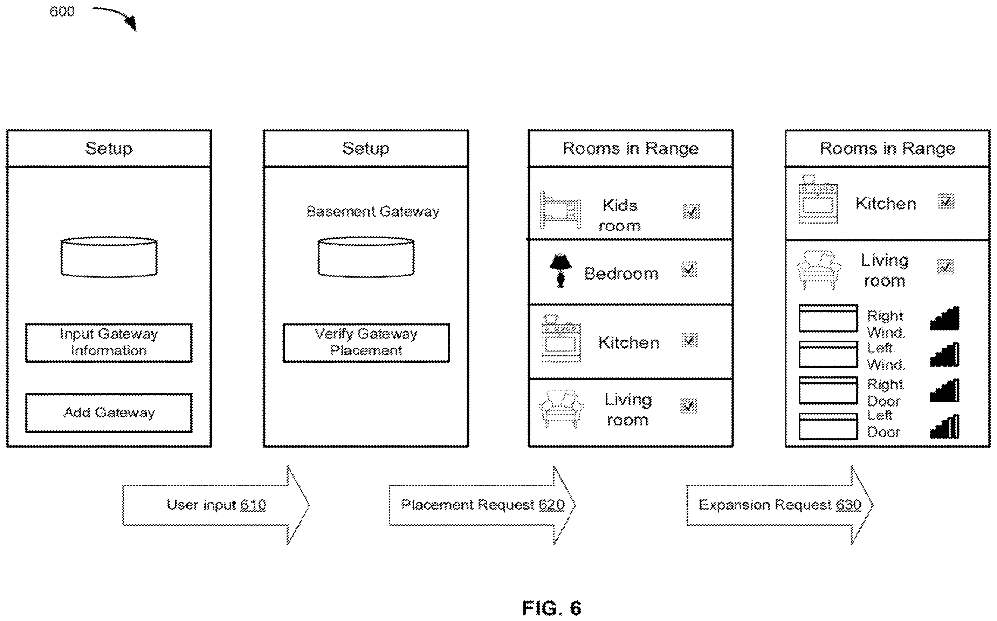

During the install and setup stage 401, an installer can install a number of coverings 410 and a gateway 420 in spaces of a structure. The installer can also operate a device 430 that executes an application for setting up the gateway 420. An example of a graphical user interface (GUI) of the application is shown in FIG. 6. The device 430 may have a data connection to a computer system 440 (e.g., over a cellular network) during the install and setup stage 401. However, if no data connection is available, the device 430 can store in its local memory (e.g., cache) information received from the computer system 440 prior to arriving to the structure and information to send to the computer system 440 after leaving the structure.

In an example, the device 430 can receive, from the computer system 440, a configuration of the coverings 410. In another example, the configuration can be generated locally at the device 430 by using the application. In both examples, the configuration can indicate covering identifiers of the coverings 410, space identifiers of the spaces, a structure identifier of the structure, and parameters for controlling the coverings (e.g., scenes, automations, etc.).

Electrical power can be supplied to the gateway 420. By using the application, the installer can setup a direct connection between the device 430 and the gateway 420 (e.g., a BLUETOOTH connection). Over this direct connection, the device 430 can send the structure identifier and a gateway identifier to the gateway 420. In an example, the gateway identifier can be defined based on input of the installer at the GUI of the application. In another example, the gateway identifier can be defined in the configuration.

Further, the coverings 410 periodically transmit broadcast signals, each of which can indicate the structure identifier of the structure and a covering identifier of a covering. The gateway 420 can receive the broadcast signals, determine the structure identifier and the covering identifiers, and generate proximity metrics (e.g., RSSIs). The gateway 420 can send, to the device 430 and upon a request therefrom, proximity information. This information includes the proximity metrics and associations between the proximity metrics and the covering identifiers (e.g., in a data structure such as {covering ID: bedroom; RSSI: -80dB}; {covering ID: kids room; RSSI: -76dB}, etc.). In turn, and based on the configuration and the proximity information, the device 430 can determine and present (e.g., at a GUI) indications of whether the gateway 420 is within a connectivity range of each space and indications of the connectivity strength (e.g., the RSSI) to each covering within each space. As such, the installer can perceive in-real time whether the placement of the gateway 420 is satisfactory, whether to re-locate the gateway 420, and/or whether to add another gateway.

The device 430 can also send the proximity information to the computer system 440. Based on the configuration and the proximity information, the computer system 440 can assign the gateway 420 to control particular ones of the coverings 410 (e.g., the assignment is by covering) or particular spaces that contain coverings (e.g., the assignment is by space, whereby the control is over the coverings in the space). This assignment is illustrated as a gateway-to-covering assignment can be sent to the device 430 for presentation at the GUI.

During the connect and configure stage 402, the gateway 420 establishes a connection to an access point of a LAN within the structure. This connection provides a connectivity path of the gateway 420 to the computer system 440 over a public data network (e.g., the Internet). The gateway can request the configuration for controlling the coverings 410. This request can indicate the structure identifier and the gateway identifier. In response, the computer system 440 can send the configuration and the gateway-covering assignment. Alternatively, the computer system 440 can determine the spaces and coverings that are assigned to the gateway 420 and can send the portion of the configuration related to these spaces and coverings. In both examples, upon receiving the configuration and assignment or the configuration portion, the gateway 420 determines the coverings that it needs to control and can establish connections with these coverings (e.g., BLUETOOTH connections).

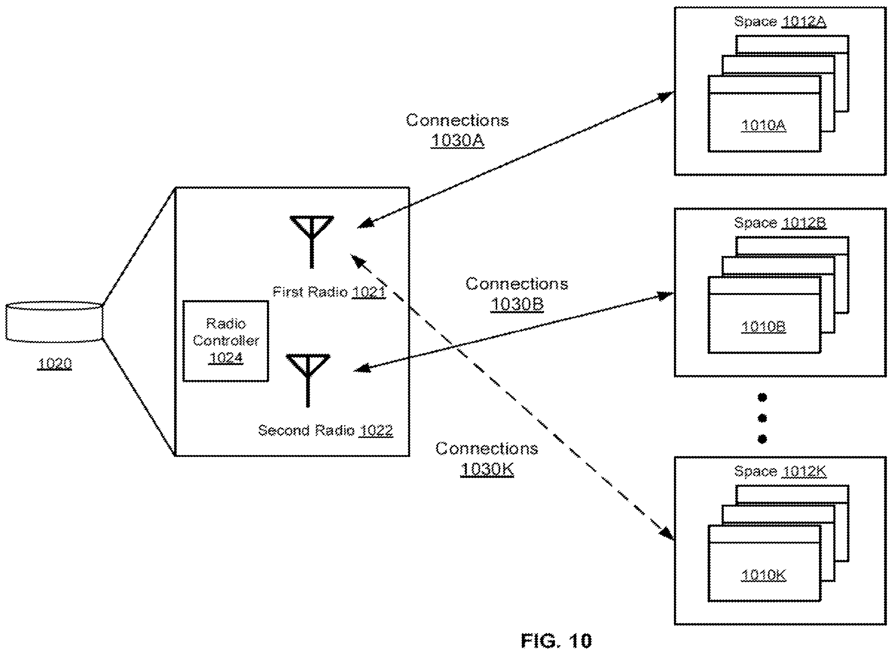

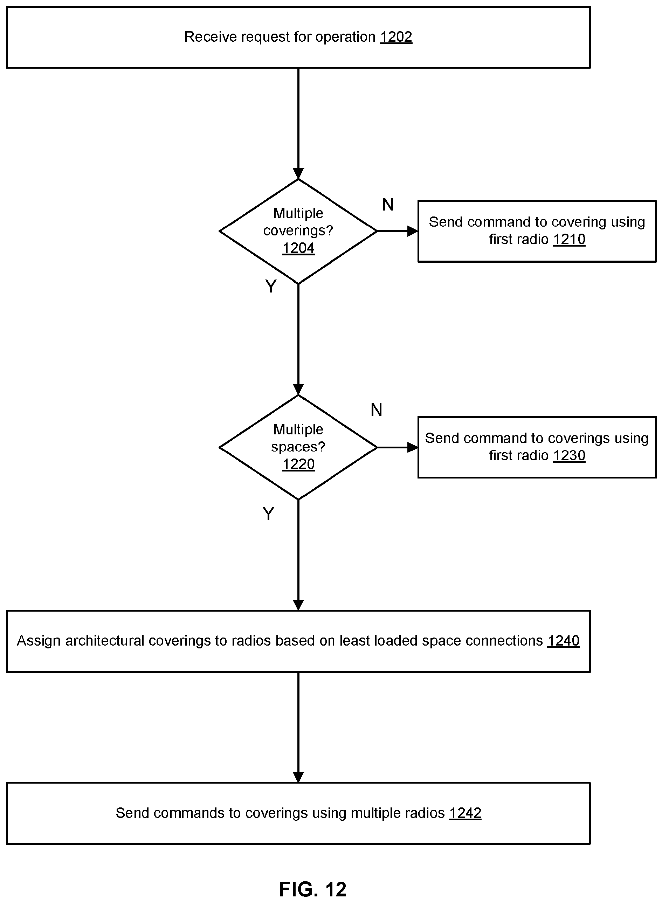

During the operate and distribute stage 403, the gateway can receive a request to operate one or more of the coverings. In an example, an operation request can be received from a user device 450, such as a smart phone or a remote control device, connected to the LAN or to the public data network. In another example, the computer system 440 can receive an operation request from a third party system (e.g., the third party system can provide functionalities to a smart appliance, such as a smart speaker; where the smart appliance receives user input, such as a natural language utterance; and where the third party system processes this input to generate and output the operation request to the computer system 440 over an application programming interface (API)). In this example, the computer system sends the operation request to the gateway 420. In both examples, the operation request can indicate a space and/or a set of coverings, and the gateway sends a command to the relevant covering(s). In an example, and as further described in FIGS. 10 and 12, when the command is to be sent to multiple coverings in a same space, the gateway 420 can establish simultaneous connections with these coverings and sequentially send the command to each covering.

During the monitor and notify stage 404, the coverings can periodically transmit broadcast signals. The gateway 420 can receive these signals. In an example, the gateway 420 processes all the received signals. In another example, the gateway 420 only processes the signals transmitted from the coverings assigned thereto. In both examples, the signal processing can include determining proximity metrics. Upon request from the computer system 440 or periodically, the gateway 420 can send proximity information that includes proximity metrics and their associations to covering identifiers. In turn, the computer system 440 can determine a change to the proximity information over time, where the change can indicate that a connectivity strength (e.g., a signal strength, such as RSSI) between a gateway 420 and a particular covering has dropped and/or that gateway 420 is no longer within a connectivity range of a particular space. In both cases, the computer system 440 can send a notification to the user device 450 about a change to the connectivity.

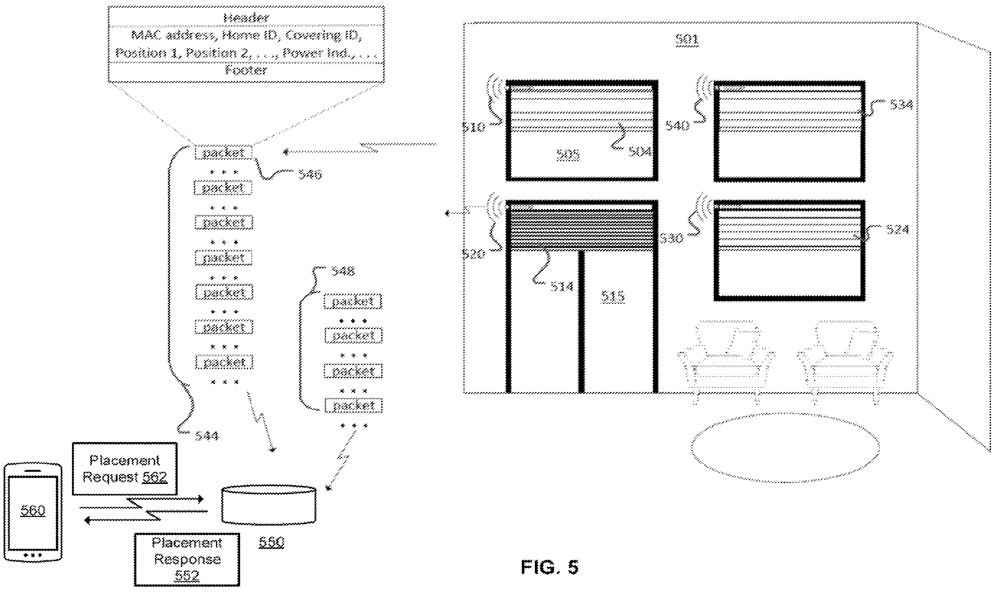

FIG. 5 illustrates an exemplary collection of proximity information. As illustrated, a space of a structure 501 includes four coverings 504, 514, 524, and 534. Each of these coverings transmits broadcast signals 510, 520, 530, or 540. A gateway 550 receives the broadcast signals 510, 520, 530, and 540. Upon a placement request 562 from a device 560, the gateway 550 generates and sends, based on the broadcast signals 510, 520, 530, and 540, a placement response 552 to the device 560. The coverings 504, 514, 524, and 534; the gateway 550; and the device 560 are examples of the coverings 410, the gateway 420, and the device 430 of FIG. 4.

Generally, a broadcast signal represents a signal that is transmitted at a predetermined interval (or rate) independently of a request from a remote device for data that the broadcast signal can indicate and without being transmitted specifically to a particular remote device. For instance, in the context of packet-based transmissions, rather than using a unicast transmission, the broadcast signal can be broadcasted as one or more packets. A broadcast of a packet includes transmitting the packet from a single source to all possible end destination within reach of a network (e.g., a Wi-Fi network, a BLUETOOTH network, a BLUETOOTH Low Energy network, etc.). In comparison, a unicast of a packet includes transmitting the packet from the single source to a single destination. The broadcast signal 526 can be transmitted (e.g., broadcasted) as packets sent at predetermined time intervals; for example, between about four and twelve transmissions per second. In the example, the broadcast signals 510, 520, 530, and 540 includes a header, and informational data of the covering. For example, informational data can include a name and/or a type of the covering. In one example, the name or type of the covering can be an eight-digit code that includes a covering type (e.g., SIL for Silhouette^{™}, PIR for Pirouette^{™}, etc.) and the corresponding serial number or a portion thereof. Additionally or alternatively, the informational data can include a model identification number. The model identification number allows for further characteristics of the type of covering to be determined, such as, but not limited to, a horizontal covering, a vertical covering, tilt functionality, vane position, opacity control, left and right extension/retraction, etc.

The broadcast signal also includes information to identify each unique covering in a structure, such as a structure identifier (e.g., home identifier (ID)) and a covering identifier (e.g., covering ID). The structure ID can be a unique ID or hash that is associated with the structure 501 so that the coverings 504-510 can be associated with the structure 501. This allows the gateway 550 to filter out broadcast signals received from coverings located in a neighboring structure (e.g., a neighbor's house).

Additionally, the broadcast signal also includes position information for each covering to identify each possible position of each covering in real time. For example, the covering 100 in FIG. 1 includes three types of position information including the extension/retraction position of the shade panel 102, the tilt position of the vanes 120, and the extension/retraction position of the light blocking panel 150. Although three types of position information are discussed, any number and type of position information is sent in the broadcast signals 510, 520, 530, and 540. As another example, coverings 504, 514, 524, and 534 have two types of position information. The first position identifier is the extension/retraction of the shade panel. The second position identifier is the tilt angle of the vanes within the shade panel. The position information is reported to the device 540 as percentages of light transmission. For example, the position 1 identifier for covering 504 is 100% because the covering panel is transmitting 100% of the possible light through window 505. The position 2 identifier for shade 504 is 100% because the vanes are perpendicular to the covering panel and then let in 100% of the available light through that portion of the covering. As another example, the position 1 identifier for shade 514 is 66% because the covering panel is retracted 66% and therefore allowing 66% of available light through the door 515. The position 2 identifier for covering 514 is 100% because the vanes are tilted at 510 degrees and therefore allow 100% of the light through that portion of the covering. The position information in the broadcast signals is updated in real time such that every time any position information is changed for any covering, which changed information is sent out in the next broadcast packet. In this example, a covering can store logic that translates between the extension/retraction position of a shade panel, the tilt position of vanes, and extension/retraction position of the light blocking panel and the percentage of light transmission. For instance, the logic can include a function that correlates the position data with the transparency. The logic can also or alternatively include a table that stores such correlations. In this way, the covering can report either the position data or the percentage of the light transmission. The covering can also receive instructions to move to a certain position, where the instructions can include the position data or the percentage of the light transmission. In the latter situation, the percentage of the light transmission is input to the logic to determine the specific position data that is output of the logic and to control the movement of the shade panel, vanes, and/or light blocking panel. Although up to three types of position information are discussed, it should be appreciated that any number of types of position information is collected and included in the broadcast signals 510, 520, 530, 540. Further, although the position information is transmitted as percentages of light transmission, position information might be recorded in any number of ways, including for example, length, degrees, etc.

The broadcast signal may further include a media access control (MAC) address, battery strength (e.g., battery level) and such further information as may be helpful to identify each covering 504, 514, 524, and 534.

The gateway 550 can selectively scan (e.g., periodically) and receive the broadcast signals 510, 520, 530, 540 from each of the architectural structural coverings 504, 514, 524, and 534. The gateway 550 can determine, from a received broadcast signal, a structure identifier and a covering identifier. The gateway 550 can also determine a signal strength of the broadcast signal so as to determine proximity thereto. For instance, the gateway 550 measures the power present in the received broadcast signal to generate an RSSI value. The RSSI value can be smoothed over a time window (e.g., a 6 seconds time window) to obtain a relative proximity value.

The device 560 can send the placement request 562 to the gateway 550. This request 562 can include the structure identifier. In turn, the gateway 550 can filter out received broadcast signals indicating another structure identifier and can further process received broadcast signals indicating the structure identifier. This processing can include determining the RSSI value of a broadcast signal received from a covering having a covering identifier, generating the proximity value, and including, in proximity information, the RSSI value and/or the proximity value and their association to the covering identifier. The proximity information is then included in the placement response 552 sent to the device 560.

FIG. 6 illustrates exemplary user interface functionalities available at a device of an installer. The device is an example of the device 560 of FIG. 5. As illustrated, a GUI 600 to an application executing on the device is presented to the installer. The GUI's functionalities allow the installer to input information about a gateway and visually perceive the quality of the gateway's placement within a space of a structure relative to the gateway's connectivity to coverings within the structure.

In an example, the GUI can initially present a page that includes a first field for inputting information about the gateway (such, as a gateway identifier) and an option to add the gateway to a configuration of the coverings. The gateway identifier can be a unique name given to the gateway within the context of the configuration. The gateway identifier can also or alternatively identify a space in which the gateway is installed. User input 610 is received at the GUI and can include text input in the first field and a selection of the option. Next, the GUI can present a page showing a graphic of the gateway and its identifier (the identifier is illustrated in FIG. 6 as "basement gateway"), along with an option to verify the placement of the gateway. A user selection of this option result in a placement request 620 being sent from the device to the gateway, where this request includes the structure identifier as described herein above. In response, the device can receive a placement response that includes proximity information.

The application can determine, from the proximity information, each proximity metric (e.g., RSSI value or proximity value) and its association with a covering identifier. Based on the configuration, the application can determine a mapping of the covering identifiers to space identifiers and can associate proximity metrics of coverings located in a same space with that space. As such, the application can generate a proximity metric per space (e.g., an average or some other statistical measure of the proximity metrics associated with the coverings located in that space).

Via the GUI 600, the application can present an indication of a proximity metric per space. This indication can inform the installer whether the space is within a connectivity range of the gateway. The indication can include text and/or a graphic. For instance, an icon of the space, a text indicating the name of the space, and a check box can be used. The icon and text can be available from the configuration. The check box is checked when the space is within a connectivity range and, otherwise, remains unchecked. Of course, other ways to present the indication per space at the GUI 600 are possible.

Further, the indications of the different spaces can be organized in a particular order at the GUI 600. For example, the application generates an order (e.g., a descending order) of the spaces based on their corresponding proximity metrics. Their indications are then listed at the GUI 600 in the same order.

Each indication can also be expandable. For instance, a user selection of an indication of a space can correspond to an expansion request 630 to present the strength of the connectivity between the gateway and the coverings located in that space. The strength related to a covering can correspond to the proximity metric of that covering. Here also, the coverings can be identified in a particular order (e.g., a descending order) that is determined from their proximity metrics. As illustrated in FIG. 6, upon the installer selecting the living room's indication, that indication is expanded show the four coverings included in that living room and their corresponding proximity metrics. Here, the indication of each covering can use an icon of the covering, a text that identifies it, and signal strength bars. The icon and the text can be available from the configuration. Further, the icon can be animated or updated to show a position of the covering based on position information received in the signal broadcasts of the covering. Of course, other ways to present the indication per covering at the GUI 600 are possible.

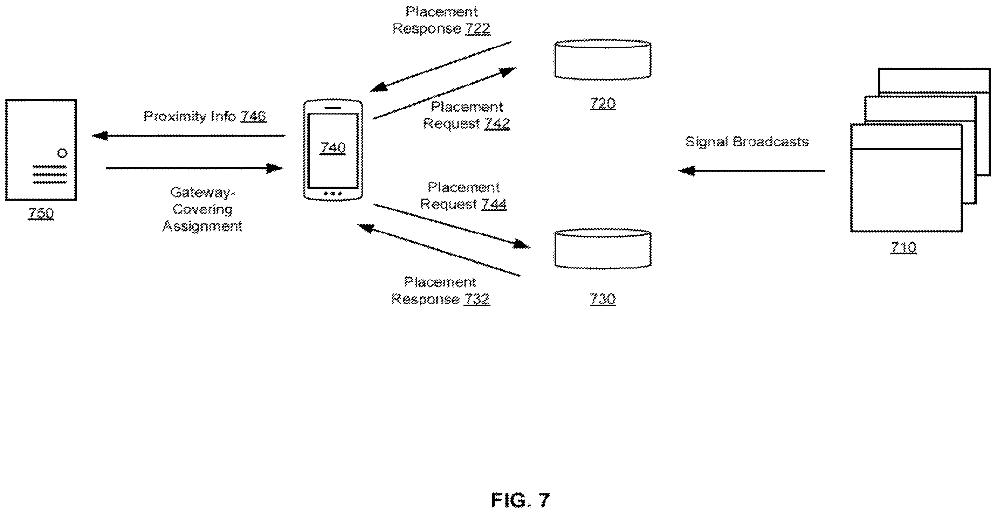

FIG. 7 illustrates exemplary interactions of a device 740 with gateways 720 and 730 and a computer system 750. The device 740, each of the gateways 720 and 730, and the computer system 750 are examples of the device 430, the gateway 420, and the computer system 440 of FIG. 4. Generally, the device 740 can receive proximity information from each gateway and can send such information to the computer system 750 to then receive a gateway-covering assignment from the computer system 750.

In an example, the gateways 720 and 730 are installed in a same structure that includes coverings 710. At a first time, the device 740 can send a placement request 742 to the gateway 720. This request 742 can include the structure identifier. In turn, based on signal broadcasts of the coverings 710, the gateway 720 sends a placement response 722 to the device 740. This response 722 includes proximity information indicating, for instance, the proximity metric per covering in relation to the gateway 720. At a second time, the device 740 can similarly send a placement request 732 to the gateway 730 and receive back a placement response 732. This response 732 includes proximity information of the coverings in relation to the gateway 730 (rather than the gateway 730). Although the requests 722 and 732 are described as being sent at different times, they can be sent in parallel, or a single request can be sent in a broadcast that is then received by the gateways 720 and 730.

The device 740 can send proximity information 746 to the computer system 750. This information 746 includes the proximity information received from the gateway 720 and the proximity information received from the gateway 730. Although the two pieces of information are described as being sent jointly in the proximity information 746, they can be instead sent separately to the computer system 750.

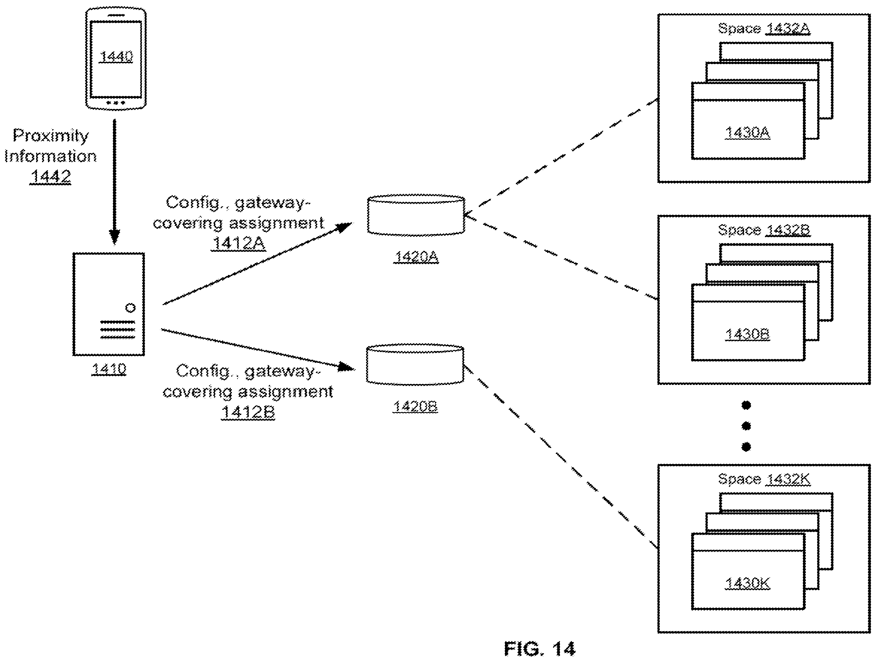

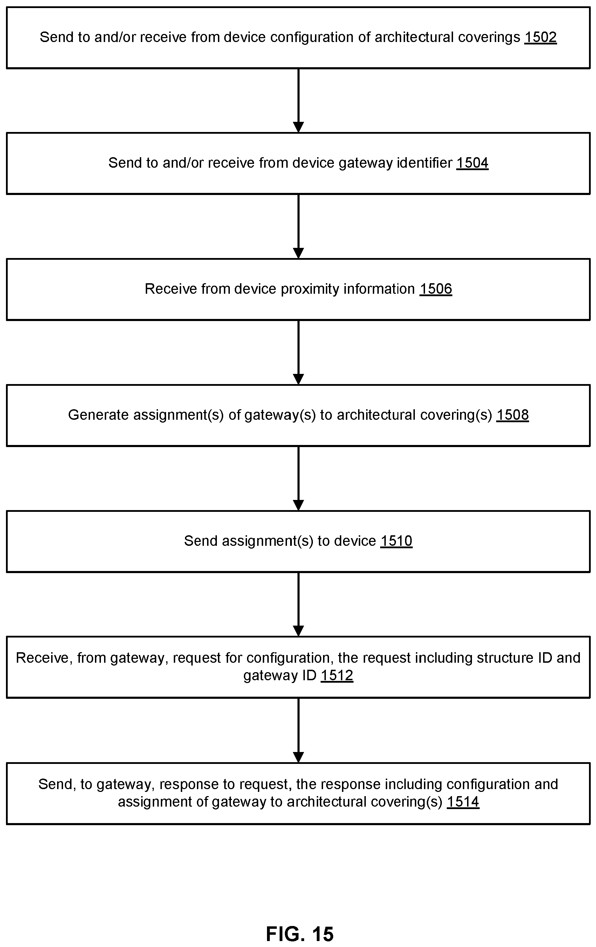

As further described in FIGS. 14 and 15, the computer system 750 can assign, based on the proximity information 746, a first set of the coverings 710 to the gateway 720 and a remaining set of the coverings 710 to the gateway 730. For example, this assignment balances the number of coverings that are controlled per gateway while also coverings belonging to the same space are assigned to the same gateway. The device 740 can receive and present at a GUI (e.g., such as in a page presented by the GUI 600) the gateway-covering assignment.

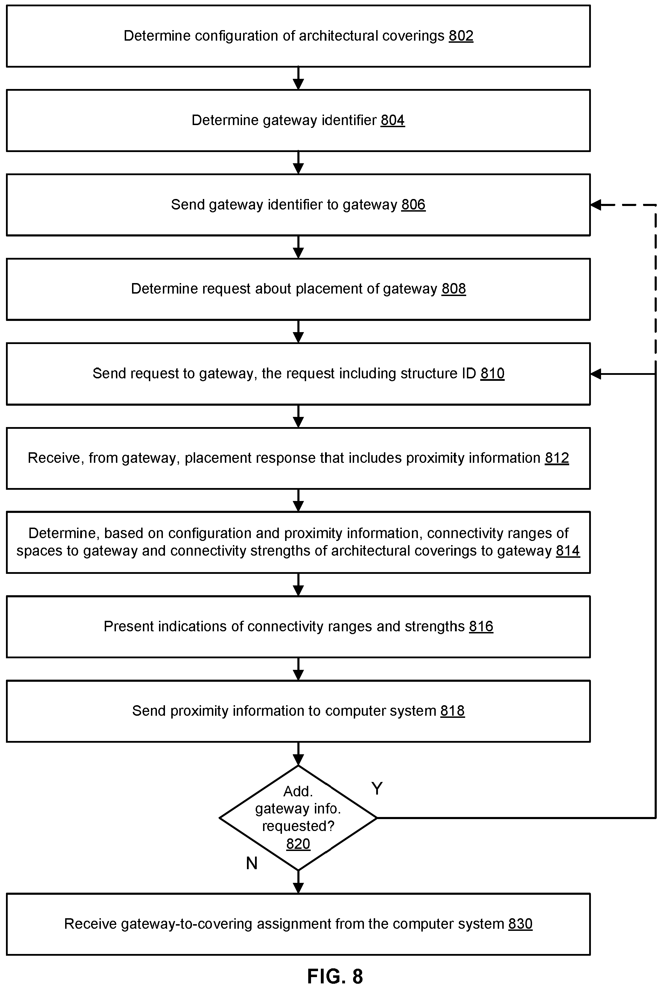

FIG. 8 is a flowchart illustrating an exemplary method for determining placement of a gateway. Operations of the flowchart can be performed by a device of an installer, such as the device 430 of FIG. 4. Some or all of the instructions for performing the operations can be implemented as hardware circuitry and/or stored as computer-readable instructions on a non-transitory computer-readable medium of the device. As implemented, the instructions represent modules that include circuitry or code executable by processor(s) of the device. The use of such instructions configures the device to perform the specific operations described herein. Each circuitry or code in combination with the relevant processor(s) represent a means for performing a respective operation(s). While the operations are illustrated in a particular order, it should be understood that no particular order is necessary and that one or more operations may be omitted, skipped, performed in parallel, and/or reordered.

The flowchart may start at operation 802, where the device determines a configuration of coverings. In an example, the configuration is received by the device from a computer system and associated with a structure. The configuration can include, among other things, a structure identifier of the structure, space identifiers of spaces within the structure, and covering identifiers of the coverings. In another example, the configuration is generated locally at the device based on user input to an application executing on the device.

At operation 804, the device determines a gateway identifier of a gateway. In an example, a GUI of the application presents a field for inputting the gateway identifier. User input is received at the field and specifies the gateway identifier. In another example, the gateway identifier is predefined in the configuration.

At operation 806, the device sends the gateway identifier to the gateway. For example, the execution of the application causes the device to establish a direct connection with the gateway. Upon determining the gateway identifier, the device sends it to the gateway over the direct connection. The device can also send the structure identifier to the gateway such that the gateway can store both the gateway identifier and the structure identifier in its local memory.

At operation 808, the device determines a request about a placement of the gateway. For example, the GUI presents an option to request placement information. A user selection of this option is received via the GUI.

At operation 810, the device sends the request to the gateway. For example, the request is sent over the direct connection and includes the structure identifier.

At operation 812, the device receives, from the gateway, a placement response to the placement request. In an example, the placement response includes proximity information of coverings in relation to the gateway. The proximity information can be generated based on signal broadcasts that indicate the structure identifier.

At operation 814, the device determines, based on the configuration and the proximity information, connectivity ranges of spaces to the gateway and connectivity strengths of coverings to the gateway. In an example, the device determines, from the mapping, a mapping of the coverings to the spaces, where covering identifiers grouped together with a space identifier indicates that the corresponding coverings are located in the corresponding space. Next, the device determines, for each space, the proximity metrics of the coverings mapped to the space. Per space, the device generates an average (or some other statistical measure) of the mapped proximity metrics, resulting in a proximity metric of the space. The device can then compare the proximity metric of the space to a threshold value (e.g., a predefined dB value). If smaller than the threshold value, the device determines that the space is outside a connectivity range of the gateway. Otherwise, the device determines that the space is within the connectivity range. Another check can be performed and can be specific to the coverings of the space. For instance, the device determines the covering that has the smallest proximity metric (e.g., the smallest RSSI value or smallest proximity value). That metric can be compared to a second threshold value. If smaller, then the connectivity of the covering to the gateway is weak, although the average proximity metric of the gateway is acceptable. In this case, the device can declare that the space is outside of the connectivity range. Otherwise, the device can declare than the space is within the connectivity range. In an addition, the device can determine, per covering, a strength of the connectivity between the covering and the gateway. For example, this strength can correspond to the proximity metric (e.g., the RSSI value or the proximity value) of the covering. The proximity metric can be compared to a set of thresholds to qualify the connectivity strength (e.g., high, medium, low; one, two, three, four, or five bards out of five bars, etc.).

At operation 816, the device presents indications of the connectivity ranges and the connectivity strengths. For example, the indications are presented at the GUI, whereby the indication of a connectivity range of a space can be expanded to present the connectivity strengths of the coverings located in the space. Further, the device can rank or sort the spaces in an order based on their proximity metrics. The spaces can be listed in the GUI according to the order. Similarly, the device can rank or sort the coverings within a space based on their proximity metrics. Upon expanding the indication of the space, the coverings can be listed in the GUI according to the order.

At operation 818, the device sends the proximity information to a computer system. For example, the proximity information can be sent over a data network in response to a request from the computer system or automatically upon receipt thereof from the gateway.

At operation 820, the device determines whether additional gateway information is requested. For example, user input can be received at the GUI to add another gateway, in which case operation 806 can follow operation 820. In another example, user input at the GUI can be received, select another gateway, and request placement information about this gateway, in which case operation 810 can follow operation 820. If no additional gateway information is requested, operation 830 can follow operation 820.

At operation 830, the device receives gateway-to-covering assignment from the computer system. This assignment can be received in response to the proximity information being sent. The device can present the assignment at the GUI by, for instance, indicating the spaces and the coverings that each gateway is responsible for controlling.

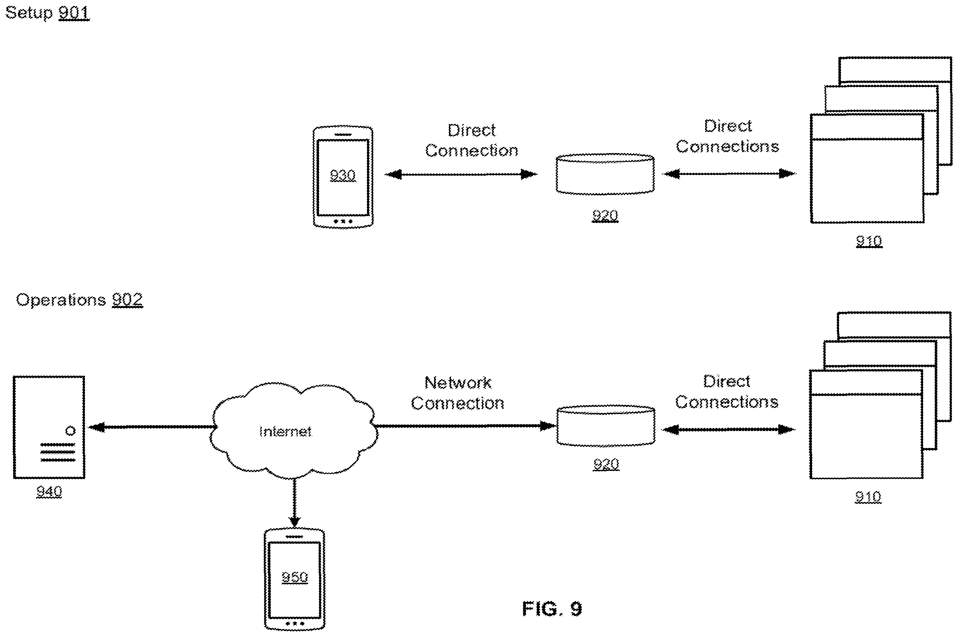

FIG. 9 illustrates exemplary connections of a gateway 920 with architectural structural coverings 910, devices 930 and 950, and a computer system 940. The types of connections can vary depending on an operational mode of the gateway 920 and can include direct connections and network connections. The operational mode include a setup mode 901 and an operations mode 902.

The setup mode 901 is generally used during the install and setup stage 401. In an example, a direct connection 920 exists between the gateway 920 and the device 930 (e.g., a device operated by an installer of the gateway 920). This direct connection can use, for example, a Wi-Fi protocol, a BLUETOOTH protocol, a BLUETOOTH Low Energy protocol, or a ZIGBEE protocol. This connection can be bi-directional where the information can be exchanged between the gateway 920 and the device 930. Further, direct connections can exist between the gateway 920 and the coverings 910. Here also, each direct connection can use, for example, a Wi-Fi protocol, a BLUETOOTH protocol, a BLUETOOTH Low Energy protocol, or a ZIGBEE protocol. However, these direct connections are typically unidirectional. In particular, the gateway 920 can receive broadcast signals of the coverings 910 but may not send information to the coverings 910.

The operations mode 902 is generally used during the connect and configure stage 402, the operate and distribute stage 403, and the monitor and notify stage 404. In an example, the gateway 720 has joined a LAN (e.g., by being connected to an access point or another node of the LAN). The LAN can be connected to another data network (e.g., via a router), such as to a public network (e.g., the Internet). A network connection can exist between the gateway 920 and the computer system 940. This network connection can include a network path via the data network (if the computer system 940 is not on the LAN) and the LAN. A network connection can also exist between the gateway 920 and the device 950 This network connection can include a network path via the data network (if the device 950 is not on the LAN) and the LAN. Whereas the computer system 940 provides configuration information to the gateway 920, the device 950 can be operated by a user to control the coverings 910 via the gateway. Further, direct connections can exist between the gateway 920 and the coverings 910. Here, the gateway 920 has been configured, and, as such, each direct connection can be bidirectional, allowing information to be exchanged between the gateway 920 and the associated covering. Here also, each direct connection can use, for example, a Wi-Fi protocol, a BLUETOOTH protocol, a BLUETOOTH Low Energy protocol, or a ZIGBEE protocol.

FIG. 10 illustrates exemplary connections of radios of a gateway 1020 with architectural structural coverings 1010. The gateway 1020 can include a plurality of radios (e.g., Wi-Fi radios, BLUETOOTH radios, ZIGBEE radios, etc.). Each radio can handle a maximum number of connections (e.g., fifteen connections) and, thus, allows the gateway 1020 be simultaneously connected to an equivalent maximum number of coverings.

In the illustration of FIG. 10, the gateway includes a first radio 1021, a second radio 1022, and a radio controller 1024. The radio controller 1020 can determine the number of connections that each radio should establish and the target endpoints of the connections (e.g., which coverings should be connected to each radio). As further described in FIG. 12, the radio controller 1024 can implement a least loaded per space algorithm to perform this determination. Generally, the radio controller 1024 balances the number of connections across the radios while also connecting coverings within a same space to the same radio. The radio controller 1024 can then instruct each radio to establish the relevant connections.

As illustrated, a first set of coverings 1010A, a second set of coverings 1010B, and so on up to a Kth set of covering 1010K are located in a first space 1012A, a second space 1012B, and so on up to a Kth space 1012K, respectively. The first space 1012A and the Kth space 1012K are assigned to the first radio 1021 (e.g., their coverings 1010A and 1010K are connected to the first radio 1021). In comparison, the second space 1012B is assigned to the second radio 1022 (e.g., its coverings 1010B are connected to the second radio 1022).

When a command to operate one of the coverings 1010A exists, the first radio 1021 sends the command over a connection 1030A to the covering. When a command to operate multiple or all of the coverings 1010A exists, the first radio 1021 sends this command sequentially over connections 1030A to these coverings (e.g., using a unicast mechanism, the first radio 1021 sends the command to a first covering of the coverings 1010A, then a second covering of the coverings 101A, and so on). When a command to operate one or more of the coverings 1010A and one or more of the coverings 1010K exists, the first radio 1021 sends the command sequentially over connections 1030A and 1030K to these coverings. Generally, the relevant connections are established first followed by the sequential command transmission. Establishing the connections can take a longer time than transmitting the command. Further, the transmissions of the command over the different connection can take a relatively short amount of time (e.g., about one-hundred milliseconds). Thus, from a user perspective, the hem bars of the coverings located within the same space appears to be operated synchronously.

Similarly, when a command to operate one of the coverings 1010B exists, the second radio 1022 sends the command over a connection 1030B to the covering. When a command to operate multiple or all of the coverings 1010B exists, the second radio 1022 sends this command sequentially over connections 1030B to these coverings. When a command to operate one or more of the coverings 1010A and/or the coverings 1010K and one or more of the coverings 1010B, the first radio 1021 sends the command over connection(s) 1030A and/or 1030K to the covering(s) 1010A and/or 1010K, whereas the second radio 1022 sends, in parallel or sequentially to the command transmission of the first radio 1021, the command over connection(s) 1030B to the covering(s) 1010B.

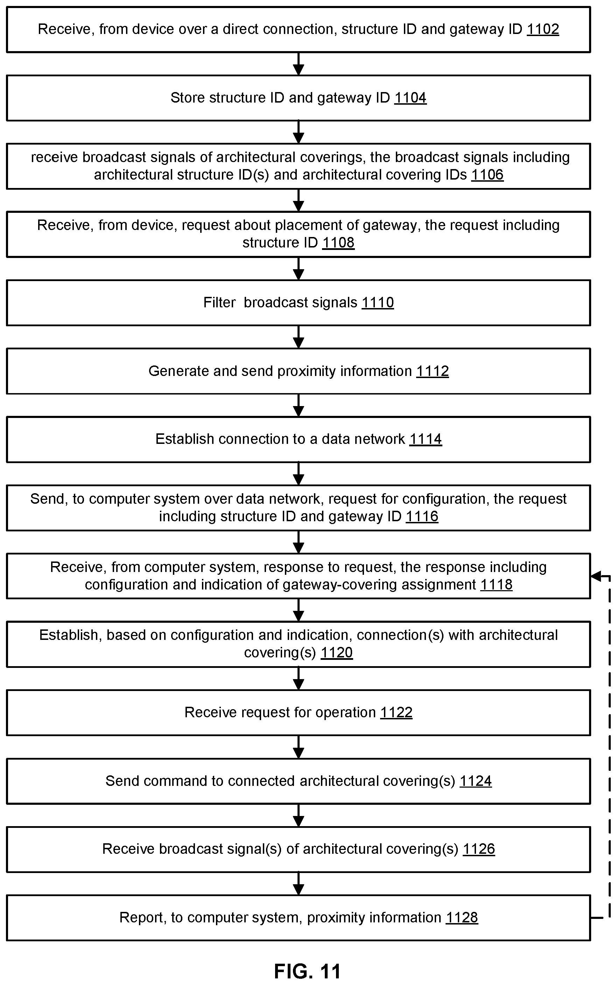

FIG. 11 is a flowchart illustrating an exemplary method for configuring a gateway. Operations of the flowchart can be performed by a gateway, such as the gateway 420 of FIG. 4. Some or all of the instructions for performing the operations can be implemented as hardware circuitry and/or stored as computer-readable instructions on a non-transitory computer-readable medium of the gateway. As implemented, the instructions represent modules that include circuitry or code executable by processor(s) of the gateway. The use of such instructions configures the gateway to perform the specific operations described herein. Each circuitry or code in combination with the relevant processor(s) represent a means for performing a respective operation(s). While the operations are illustrated in a particular order, it should be understood that no particular order is necessary and that one or more operations may be omitted, skipped, performed in parallel, and/or reordered.

The flowchart may start at operation 1102, where the gateway received, from a device over a direct connection, a structure identifier and a gateway identifier. For example, the device can be operated by an installer. The structure identifier corresponds to a structure where the gateway is located. The gateway identifier can uniquely identify the gateway within the structure.

At operation 1104, the gateway stores the structure identifier and the gateway identifier. For example, these two pieces of information can be stored in a local memory of the gateway.

At operation 1106, the gateway receives signal broadcasts of coverings. In an example, a signal broadcast received from a covering includes a structure identifier of a structure where the covering is installed, in addition to a covering identifier of the covering. The gateway can filter out signal broadcasts that indicate a different structure from the one where the gateway is installed. The gateway can also process the remaining signal broadcasts to generate proximity metrics and their associations with coverings located in the structure. Such proximity metrics and associations can be stored in the local memory (e.g., in a rolling buffer having a certain size, such as to store the proximity information determined during the last six seconds or some other time interval).

At operation 1108, the gateway receives, from the device, a request about placement of the gateway. This request can also be received over the direct connection and can include the structure identifier of the structure where the gateway is located.

At operation 1110, the gateway filters signal broadcasts that are received and that do not include the structure identifier.

At operation 1112, the gateway generates and sends proximity information to the device in a response to the request. The response can be sent over the direct connection. The proximity information can generated from the information stored in the buffer and any new broadcast signals that include the structure identifier.

At operation 1114, the gateway establishes a connection to a data network. For example, the data network includes a LAN at the structure. The data network can also include a public network (e.g., the Internet) to which the LAN is connected. The gateway can be powered up and connected over a direct connection with a user device that then sends credentials of an access point of the LAN to the gateway. Additionally or alternatively, a Wi-Fi Protected Setup (WPS) procedure can be followed to establish the connection to the LAN.

At operation 1116, the gateway sends, to a computer system over the data network, a request for a configuration of the coverings. In an example, the request is sent automatically by the gateway upon gaining access for the first time to the data network, upon a command from the user device, or a user selection of a button on the gateway. The request can include the structure identifier and the gateway identifier.

At operation 1118, the gateway receives, from the computer system over the data network, a response to the request. In an example, the response includes the configuration and an indication of what coverings and/or spaces are assigned to the gateway. Alternatively, the response includes only a portion of the configuration, where this portion is specific to the covering and/or spaces assigned to the gateway.

At operation 1120, the gateway establishes, based on the configuration and the indication, connection(s) with the covering(s) assigned thereto. For example, a connection to a covering is a direct connection. When multiple connections are established, a star topology can be used. Further, the connections can be distributed between multiple radios of the gateway.

At operation 1122, the gateway receives a request for an operation to be performed. This request can be specific to a covering, a set of coverings, a space, or a set of spaces. If the covering(s) or space(s) is not assigned to the gateway, the gateway can ignore the request. Otherwise, the gateway can determine, from the configuration of the covering(s) and/or space(s) a command to perform the operation.

At operation 1124, the gateway sends the command to the connected covering(s). The command can be sent to multiple coverings over multiple connections. The command transmission can be sequential over connections to a same radio of the gateway, or parallel over connections to multiple radios of the gateway as described in FIG. 10.

At operation 1126, the gateway receives broadcast signal(s) of architectural covering(s). Similar to operation 1106, if a received signal indicates a structure other than the one where the gateway is located, the gateway can ignore this signal. Otherwise, the gateway further processes the received signal to generate a proximity metric and its association with a covering. This information can be stored in the memory buffer.

At operation 1128, the gateway reports, to the computer system over the data network, proximity information from its memory buffer. This information can be sent in a response to a request from the computer system or can be automatically sent on a periodic basis. In some situations, the proximity information can indicate a change to a space being within a wireless range of the gateway and/or a strength of a connection between the gateway and a covering. In such situations, the computer system can generate an updated gateway-to-covering assignment and the sends this update to the gateway, as illustrated with the dashed loop from operation 1128 to operation 1118.

FIG. 12 is a flowchart illustrating an exemplary method for operating architectural structural coverings via a multi-radio gateway. Operations of the flowchart can be performed by a radio controller of the multi-radio gateway, such as the radio controller 1024 of FIG. 10. Some or all of the instructions for performing the operations can be implemented as hardware circuitry and/or stored as computer-readable instructions on a non-transitory computer-readable medium of the radio controller. As implemented, the instructions represent modules that include circuitry or code executable by processor(s) of the g radio controller. The use of such instructions configures the radio controller to perform the specific operations described herein. Each circuitry or code in combination with the relevant processor(s) represent a means for performing a respective operation(s). While the operations are illustrated in a particular order, it should be understood that no particular order is necessary and that one or more operations may be omitted, skipped, performed in parallel, and/or reordered.

The flowchart may start at operation 1202, where the radio controller may receive a request for an operation. The request may be sent from a user device or a computer system over a data network.

At operation 1204, the radio controller determines whether the operation is to be performed by multiple coverings. For example, the request can include covering identifier(s) and/or space identifier(s). If a space identifier of a space is included, the radio controller can determine, based on the configuration, the covering identifier(s) of the covering(s) located in the space. If the operation is to be performed by a single covering, operation 1210 can follow operation 1204. Otherwise, operation 1220 follows operation 1204.

At operation 1210, the radio controller sends a command to a covering using a first radio. For example, the command includes a set of instructions to perform the operation (e.g., open, shut, move to position, etc.). The covering can correspond to the covering identifier determined at operation 1204. The radio controller can select any one of the radios of the gateway and this radio can then establish a direct connection with the covering. Or, if a radio has an already established connection with the covering, the radio can be selected. In both situations, the selected radio can send the command in a unicast to the covering. Alternatively, the selected radio can send a broadcast that includes the command and the covering identifier. In this case, the coverings that do not have the covering identifier can ignore the broadcast.

At operation 1220, the radio controller determines whether the operation is to be performed in multiple spaces. As explained herein above, the request can include covering identifiers and/or space identifier(s). If the covering identifiers are included, the radio controller can determine, based on the configuration, the space(s) to which they are mapped. If only one space is identified, operation 1230 can follow operation 1220. Otherwise, operation 1240 can follow operation 1220.

At operation 1230, the radio controller sends a command to the coverings in a space using a first radio. For example, the command includes a set of instructions to perform the operation (e.g., open, shut, move to position, etc.). The space can correspond to the space identifier determined at operation 1220. The radio controller can select any one of the radios of the gateway and this radio can then establish direct connection with the coverings. Or, if a radio has already established connections with the coverings, the radio can be selected. In both situations, the selected radio can send the command in sequential unicasts to each of the coverings. Alternatively, the selected radio can send a broadcast that includes the command and the covering identifiers. In this case, a coverings that does not have any of the covering identifiers can ignore the broadcast.

At operation 1240, the radio controller assigns architectural coverings to radios based on a least loaded space connection algorithm. This algorithm can balance the total number of connections that each radio needs to establish with the assignment of radios located within a same space to the same radio. For example, the radio controller determines, based on the configuration, sets of coverings located in spaces. A first set of coverings located in a first space is assigned to a first radio, a second set of covering located in a second space is assigned to a second radio, and so on. Assume that the gateway has a total number of "K radios (e.g., "K=2). For a "K+1" set of coverings located in a "K+1" space, the radio controller determines the radio of the "K" radios that have the least number of connects to coverings. The "K+1" set is then assigned to this radio. This process is repeated for any remaining sets of coverings.

At operation 1242, the radio controller sends commands to covering using multiple radios. For example, a radio assigned a set of coverings establishes connections with the coverings. The radio can then send the command in sequential unicast over the connections, or using a broadcast over the connections.

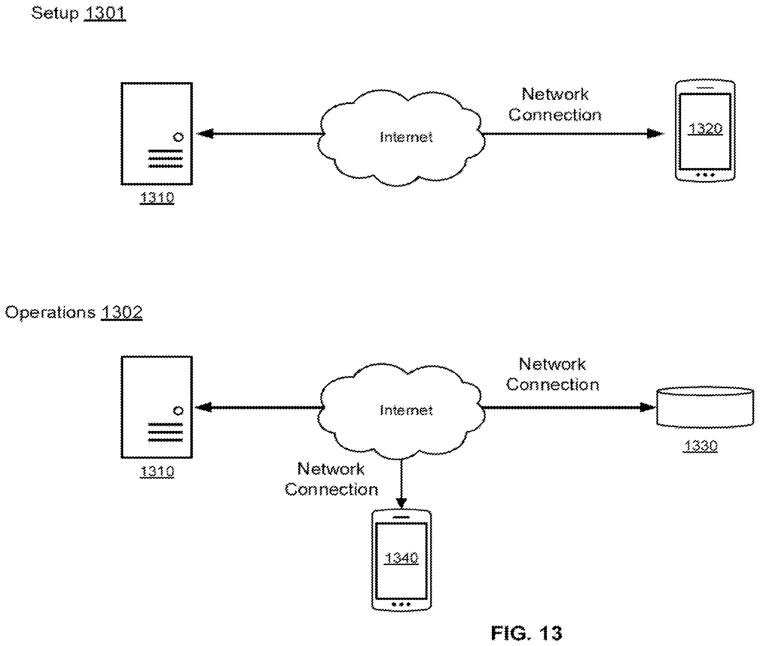

FIG. 13 illustrates exemplary connections of a computer system 1310 with endpoints, such as devices 1320 and 1340 and a gateway 1330. The computer system 1310 is an example of the computer system 440 of FIG. 4. The endpoint that the computer system 1310 can connect with can vary depending on an operational mode and/or the computer system 1310. The operational mode includes a setup mode 1301 and an operations mode 1302.

The setup mode 1301 is generally used during the install and setup stage 401. In an example, the gateway 1330 has not joined yet a LAN at a structure where the gateway 1330 is located. The device 1320 may have arrived to the structure and can be operated by an installer to setup the gateway 1330. In this case, a network connection can exist between the computer system 1310 an the user device. This network connection can include network via a public network (e.g., the Internet) and, possibly, other networks (e.g., a cellular network).

The operations mode 1302 is generally used during the connect and configure stage 402, the operate and distribute stage 403, and the monitor and notify stage 404. In an example, the gateway 720 has joined the LAN at this point. The LAN can be connected to another data network (e.g., via a router), such as to a public network (e.g., the Internet). A network connection can exist between the computer system 1310 and the gateway 1330. This network connection can include a network path via the data network (if the computer system 1310 is not on the LAN) and the LAN. A network connection can also exist between the computer system 1310 and the device 1340. This network connection can include a network path via the data network (if the device 1340 and the computer system 1310 are not on the LAN) and the LAN (if the device 1340 in on the LAN) and, possibly, other networks (e.g., a cellular network if the device 1340 is not on the LAN). Whereas the computer system 1310 provides configuration information to the gateway 1330, the computer system 1310 can send notifications to the device 1340 about the gateway 1330 and/or coverings controller by the gateway 1330.

FIG. 14 illustrates an exemplary assignment of architectural structural coverings 1432 to multiple gateways 1420. Generally, the gateways 1420 (illustrated as a first gateway 1420A and a second gateway 1420B, although a larger number of gateways is possible) are located in the same structure where the coverings 132 are installed. A device 1440 (e.g., the device 1320 of FIG. 13) can be operated by an installer and can receive proximity metrics from each of the gateways 1420. Over a data network, the device 1440 can send, as proximity information 1442, the received proximity metrics to the computer system 1410. In turn, the computer system 1410 can determine, based on the proximity information 1442, gateway-to-covering assignments an can store such assignments along with the configuration of the coverings 1432. As further described in the next figures, to determine the assignments, the computer system 1410 assigns, to the same gateway, coverings that belong to a same space, while also balancing the distribution of the different spaces to the gateway (e.g., for load balancing such that, at the end, the gateways are assigned a similar number of spaces and/or of coverings).

In the illustration of FIG. 14, a first space 1432, a second space 1432B, and so on up to a Kth space 1432K include a first set of coverings 1430A, a second set of coverings 1430B, and so on up to a Kth set of coverings 1430K, respectively. The computer system 1410 assigns, among other things the first space 1432A and the second space 1432B (or, equivalently, the first set of coverings 1430A and the second set of coverings 1430B) to the first gateway 1420A, and the Kth space 1432K (or, equivalently, the Kth set of coverings 1430K) to the second gateway 1420B.

Over a data network, the computer system 1410 can send, to the first gateway, the configuration and a first gateway-to-covering assignment 1412A. This assignment 1412A indicates the spaces and/or coverings that the gateway 1420A is responsible for controlling (e.g., spaces 1432A and 1432B and/or coverings 1430A and 1430B). Similarly, the computer system 1410 can send, to the second gateway and over the data network, the configuration and a second gateway-to-covering assignment 1412B. This assignment 1412B indicates the spaces and/or coverings that the gateway 1420B is responsible for controlling (e.g., space 1432K and/or coverings 1430K). As explained herein above, in an alternative example, rather than sending the configuration and a gateway-to-covering assignment to a gateway, the computer system 1410 can determine the portion of the configuration that includes configuration information specific to the space(s) and/or covering(s) assigned to the gateway and can send only this portion to the gateway.

FIG. 15 is a flowchart illustrating an exemplary method for a computer system sending a configuration about architectural structural coverings to a gateway. Operations of the flowchart can be performed by the computer system, such as the computer system 440 of FIG. 4. Some or all of the instructions for performing the operations can be implemented as hardware circuitry and/or stored as computer-readable instructions on a non-transitory computer-readable medium of the computer system. As implemented, the instructions represent modules that include circuitry or code executable by processor(s) of the computer system. The use of such instructions configures the computer system to perform the specific operations described herein. Each circuitry or code in combination with the relevant processor(s) represent a means for performing a respective operation(s). While the operations are illustrated in a particular order, it should be understood that no particular order is necessary and that one or more operations may be omitted, skipped, performed in parallel, and/or reordered.

The flowchart may start at operation 1502, where the computer system sends to and/or receives from a device a configuration of coverings. The configuration can be received/sent as configuration information over a data connection between the computer system and the device. The device can be operated by an installer of the coverings.

At operation 1504, the computer system sends to and/or receives from the device a gateway identifier of a gateway. For example, the gateway identifier is input by the installer at the GUI of the device and sent therefrom to the computer system over the data connection. In another example, the gateway identifier can be predefined in the configuration and sent to the device over the data connection.

At operation 1506, the computer system receives, from the device, proximity information. In an example, the proximity information can be received over the data connection and can include the gateway identifier, proximity metrics, and associations between the proximity metrics and covering identifiers.

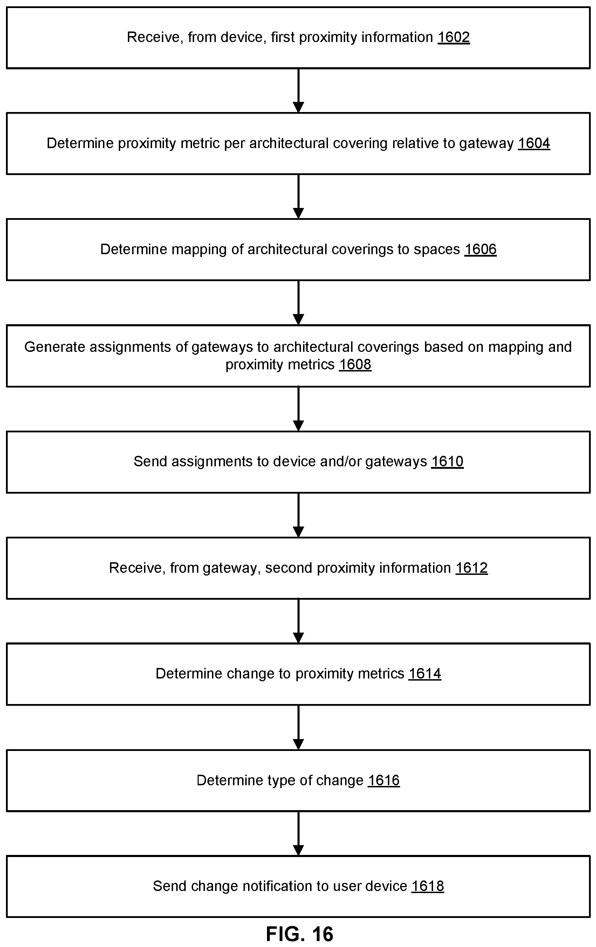

At operation 1508, the computer system generate assignment(s) of gateway(s) to covering(s). The number and process to generate the assignment(s) depends on the number of gateways. In one example, the proximity information identifies a single gateway. In this example, the computer system assigns the gateway to the coverings identified in the proximity information (or, equivalently, to the space(s) where the coverings are located). In another example, the proximity information identifies multiple gateways. In this example, the computer system follows a process that balances, in light of the proximity information, the total number of coverings (and/or spaces) assigned per gateway with a target of assigning, to a same gateway, coverings belonging to a same space. An example of this process is further described in FIG. 16.

At operation 1510, the computer system sends the assignment(s) to the device. For example, the assignment(s) can be sent over the data connection, such that the device can present the assignment(s) to the installer via the GUI.

At operation 1512, the computer system receives, from a gateway, a request for the configuration. In an example, the request includes the structure identifier and the gateway identifier. This request can be received over a data connection between the computer system and the gateway upon the gateway gaining access to a data network (e.g., by joining a LAN).

At operation 1514, the computer system sends, to the gateway, a response to the request. In an example, the response is sent over the data connection and includes the configuration and at least the assignment of the gateway to covering(s). Alternatively, the computer system can send a portion of the configuration specific to the covering(s) and/or the space(s) where the covering(s) is (are) located.

FIG. 16 is a flowchart illustrating an exemplary method for assigning architectural structural coverings to multiple gateways and monitoring proximity over time. Operations of the flowchart can be performed by the computer system, such as the computer system 440 of FIG. 4. Some or all of the instructions for performing the operations can be implemented as hardware circuitry and/or stored as computer-readable instructions on a non-transitory computer-readable medium of the computer system. As implemented, the instructions represent modules that include circuitry or code executable by processor(s) of the computer system. The use of such instructions configures the computer system to perform the specific operations described herein. Each circuitry or code in combination with the relevant processor(s) represent a means for performing a respective operation(s). While the operations are illustrated in a particular order, it should be understood that no particular order is necessary and that one or more operations may be omitted, skipped, performed in parallel, and/or reordered. Further, some of the operations can be implemented as sub-operations of the flowchart of FIG. 15.

The flowchart may start at operation 1602, where the computer system receives, from a device, first proximity information. In an example, the first proximity information includes multiple gateway identifier, associates each of such identifiers with proximity metrics, and associates each of such proximity metrics with a covering identifier. The computer system can store this proximity information (e.g., in local memory or in a data store).

At operation 1604, the computer system determines a proximity metric per covering relative to a gateway. For example, for each gateway identifier the computer system has prestored in memory, the computer system parses the proximity information to determine the associated proximity metrics. A determined proximity metric indicates a proximity (e.g., as a function of signal strength) between the associated covering and the gateway associated with the gateway identifier.

At operation 1606, the computer system determines mapping of coverings to spaces. For example, the mapping can be determined from the configuration, where the configuration associates covering identifiers with space identifiers.

At operation 1608, the computer system generates assignments of gateways to covering based on the mapping and proximity metrics. In an example, for each space identifier and gateway identifier, the computer system generates a proximity metric by averaging (or using some other statistical measure) the proximity metrics associated with the coverings associated with the space identifier and the gateway identifier (e.g., the proximity metrics generated by the gateway corresponding to the gateway identifier from broadcast signals of the coverings located in a space corresponding to the space identifier). This space proximity metric is associated with the space identifier and the gateway identifier (e.g., with the corresponding space and the corresponding gateway). Next, the computer system compares this space proximity metric to another space proximity metric associated with the same space but with another gateway identifier. This comparison allows the computer system to determine the best space proximity metric of the space across the different gateways. The best space proximity metric is associated with a particular gateway. The computer system can then assign this gateway to the space and the coverings located in the space. This process can be repeated per space by using its corresponding space proximity metrics. As the computer system assigns gateways to spaces (and, their coverings), the computer system tracks the total number of spaces and/or covering assigned per gateway. The total numbers can be compared and the comparison can indicate whether an imbalance exists or not. For instance, an imbalance exists when the difference between two total numbers of two gateways exceeds a predefined threshold difference. In this case, the assignment process can be repeated and continued. However, rather than using the best space proximity metric per space, the computer system can use the next best proximity metric (or any of the space proximity metrics of the space that exceeds a threshold value) such that the imbalance can be resolved.

At operation 1610, the computer system sends the assignments to the device and/or to gateways. For example, the assignments can be sent to the device during the install and setup stage and to the gateways during the connect and configure stage.

At operation 1612, the computer system receives, from a gateway, second proximity information. This second proximity information can have a similar content as the first proximity information except that it is limited to the gateway and does not include any metrics associated with gateway identifiers of other gateways.

At operation 1614, the computer system determines a change to proximity metrics. For example, the computer system determines a portion of the first proximity information, where this portion is specific to the gateway. This portion represents a first proximity snapshot at a first point in time (e.g., during the install and setup stage). The computer system also compares the portion to the second proximity information. This information represents a second proximity snapshot at a second point in time (e.g., during the monitor and notify stage). The comparison can be at a covering granularity level, where a proximity metric associated with a covering can be tracked over time (e.g., as a function of the difference between the first point in time and the second point in time). The comparison can be additionally or alternatively at a space granularity level, where a space proximity metric associated with a space can be tracked over time (e.g., as a function of the difference between the first point in time and the second point in time).

At operation 1616, the computer system determine a type of the change. In one example, at the covering granularity level, if only the proximity metric of a covering changed substantially (e.g., the difference of this metric between the two point of times exceeds a threshold value), while the proximity metric of other coverings did not change substantially, the computer system can determine that the strength of the connectivity between the covering and the gateway has changed (e.g., due to an object being placed in the structure in a way that impacts the transmitted signals from the covering to the gateway), but that the placement of the gateway has not changed. In contrast, if the proximity metric of multiple coverings changed substantially (e.g., a certain percentage of the coverings over a threshold percentage have their proximity metrics change substantially), the computer system can determine that the placement has changed. In another example, at the space granularity level, if only the space proximity metric of a space changed substantially (e.g., the difference of this metric between the two point of times exceeds a threshold value), while the space proximity metric of other spaces did not change substantially, the computer system can determine that the space of became out of the wireless range of the gateway has changed (e.g., due to an object being placed in the structure in a way that impacts the transmitted signals from the coverings of that space to the gateway), but that the placement of the gateway has not changed. In contrast, if the space proximity metric of multiple coverings changed substantially (e.g., a certain percentage of the spaces over a threshold percentage have their space proximity metrics change substantially), the computer system can determine that the placement has changed. In yet another example, the information at both levels of granularity are used. For instance, if the proximity metric of a covering changed substantially, the computer system can determine whether the space proximity metric of the space covering also changed substantially. If not, the change is limited to the connectivity between the covering and the gateway. Otherwise, the change can be because of a change to the placement of the gateway relative to the space. In this case, the computer system can look up the space proximity of other spaces to determine whether a substantial changes occurred thereto. If so (for example, the space proximity metric of another space became substantially better or substantially worsened), the computer system can confirm the change to the gateway's placement.

At operation 1618, the computer system sends a notification to a user device about the change. In an example, the user device can be operated by a user to control the coverings via the gateway. The notification can indicate that a change occurred and can identify, when possible, the type of change.

Although embodiments of the present disclosure are described with regard to architectural structural coverings, the embodiments are not limited as such. Instead, the embodiments similarly apply to any type of device (e.g., an internet of things (IoT) device) that can be connected to a gateway.

Although embodiments of the present disclosure are described with regard to a gateway, the embodiments are not limited as such. Instead, the embodiments similarly apply to any type of device that can connect to multiple devices for providing remote controls of these devices and/or for providing access to functionalities of these devices. For instance, the embodiments similarly apply to network extenders and other types of network nodes.

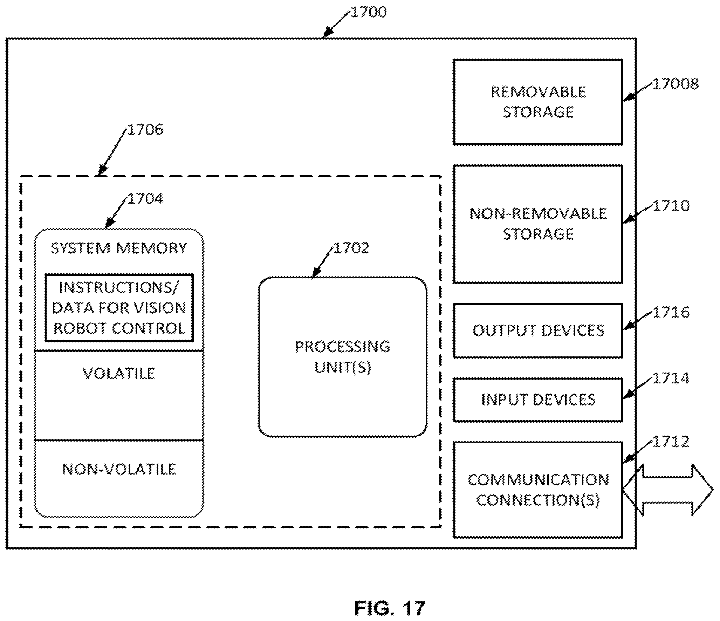

FIG. 17 is a block diagram of an exemplary operating environment 1700 in which one or more of the present examples may be implemented. For example, operating environment 1700 can be implemented by any of the architectural structural covering controller 142 (shown in FIG. 2), he gateway 420 (FIG. 4), the devices 430 and 450 (FIG. 4), and/or the computer system 440 (FIG. 4). This is only one example of a suitable operating environment and is not intended to suggest any limitation as to the scope of use or functionality. Other well-known computing systems, environments, and/or configurations that are suitable for use include, but are not limited to, personal computers, server computers, hand-held or laptop devices, multiprocessor systems, microprocessor-based systems, programmable consumer electronics such as smart phones, network PCs, minicomputers, mainframe computers, distributed computing environments that include any of the above systems or devices, and the like.

In its most basic configuration, operating environment 1700 typically includes at least one processing unit 1702 and memory 1704. Depending on the exact configuration and type of computing device, memory 1704 (instructions to perform aspects disclosed herein) may be volatile (such as RAM), non-volatile (such as ROM, flash memory, etc.), or some combination of the two. This most basic configuration is illustrated in FIG. 17 by dashed line 1706. Further, environment 1700 may also include storage devices (removable, 1708, and/or non-removable, 1710) including, but not limited to, magnetic or optical disks or tape. Similarly, environment 1700 may also have input device(s) 1714 such as keyboard, mouse, pen, voice input, etc. and/or output device(s) 1716 such as a display, speakers, printer, etc. Also included in the environment may be one or more communication connections, 1712, such as LAN, WAN, point to point, etc.

Operating environment 1700 typically includes at least some form of computer readable media. Computer readable media can be any available media that can be accessed by processing unit 1702 or other devices comprising the operating environment. By way of example, and not limitation, computer readable media may comprise computer storage media and communication media. Computer storage media includes volatile and nonvolatile, removable and non-removable media implemented in any method or technology for storage of information such as computer readable instructions, data buildings, program modules or other data. Computer storage media includes, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other tangible, non-transitory medium which can be used to store the desired information. Computer storage media does not include communication media.

Communication media embodies computer readable instructions, data buildings, program modules, or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared, and other wireless media. Combinations of the any of the above should also be included within the scope of computer readable media.

The operating environment 1700 may be a single computer operating in a networked environment using logical connections to one or more remote computers. The remote computer may be a personal computer, a server, a router, a network PC, a peer device, or other common network node, and typically includes many or all of the elements described above as well as others not so mentioned. The logical connections includes any method supported by available communications media. Such networking environments are commonplace in offices, enterprise-wide computer networks, intranets, and the Internet.

Aspects of the present disclosure, for example, are described above with reference to block diagrams and/or operational illustrations of methods, systems, and computer program products according to aspects of the disclosure. The functions/acts noted in the blocks may occur out of the order as shown in any flowchart. For example, two blocks shown in succession may in fact be executed substantially concurrently or the blocks may sometimes be executed in the reverse order, depending upon the functionality/acts involved.

The description and illustration of one or more aspects provided in this application are not intended to limit or restrict the scope of the disclosure as claimed in any way. The aspects, examples, and details provided in this application are considered sufficient to convey possession and enable others to make and use the best mode of claimed disclosure. The claimed disclosure should not be construed as being limited to any aspect, example, or detail provided in this application. Regardless of whether shown and described in combination or separately, the various features (both structural and methodological) are intended to be selectively included or omitted to produce an embodiment with a particular set of features. Having been provided with the description and illustration of the present application, one skilled in the art may envision variations, modifications, and alternate aspects falling within the scope of the claimed disclosure.

## Claims

1. A method implemented by a device, the method comprising:
determining a configuration of a plurality of architectural coverings located within a structure, wherein the configuration is associated with a structure identifier of the structure, and wherein the plurality of architectural coverings comprise a first architectural covering located within a space of the structure;
sending, to a gateway, a request for proximity metrics, wherein the request comprises the structure identifier;
receiving, from the gateway, a response to the request, wherein the response comprises a first proximity metric and a first architectural covering identifier of the first architectural covering, wherein the first proximity metric indicates a first proximity between the gateway and the first architectural covering; and
presenting an indication of the first proximity at a user interface of the device.

2. The method of claim 1, wherein the response further comprises a second proximity metric and a second architectural covering identifier of a second architectural covering, wherein the second proximity metric indicates a second proximity between the gateway and the second architectural covering, wherein the configuration indicates that the first architectural covering and the second architectural covering are located within the space, and wherein the method further comprises:
determining a third proximity metric between the gateway and the space based on the first proximity metric and the second proximity metric; and
presenting an indication of the third proximity metric at the user interface,
optionally further comprising:
presenting an indication of the second proximity at the user interface, wherein the indication of the first proximity and the indication of the second proximity are presented upon a selection of the space at the user interface, and wherein the space, the first architectural covering, and the second architectural covering are identified at the user interface based on the configuration.

3. The method of claim 1, wherein the first proximity metric comprises a first average received signal strength indicator (RSSI) determined based on broadcast signals by the first architectural covering, and wherein the response comprises the averaged RSSI and an association between the average RSSI and the first architectural covering identifier.

4. The method of claim 3, wherein the response further comprises a second average RSSI and an association between the second average RSSI and a second architectural covering identifier of a second architectural covering, and wherein the method further comprises:
determining, based on the configuration, that the first architectural covering and the second architectural covering are located within the space;
determining a proximity metric of the space based on the first average RSSI and the second average RSSI;
comparing the proximity metric of the space and a threshold value; and
presenting, at the user interface, an indication that the space is within a connectivity range of the gateway based on the comparison.

5. The method of claim 4, further comprising:
determining, based on the configuration, a subset of architectural coverings from the plurality of architectural coverings;
determining, from the response, the smallest average RSSI associated with an architectural covering of the subset; and
comparing the smallest average RSSI to a threshold RSSI; and
determining that all architectural coverings of the subset are connected with the gateway based on the comparison of the smallest average RSSI and the threshold RSSI
optionally further comprising:
generating an order of the architectural coverings of the subset based on RSSIs that correspond to the subset; and
presenting, at the user interface, proximity indications between the gateway and the architectural coverings of the subset, wherein the proximity indications are listed based on the order.

6. The method of claim 1, wherein the space is a first space, and wherein the method further comprises:
determining, based on the configuration, that a first subset of the plurality of architectural coverings is associated with the first space, wherein the first subset comprises the first architectural covering;
determining, based on the configuration and from the response, first proximity metrics that correspond to the first subset, wherein the first proximity metrics comprise the first proximity metric of the first architectural covering;
determining a first average proximity metric of the first space based on the first proximity metrics; and
presenting, at the user interface, an indication that the first space is within a connectivity range of the gateway based on the first average proximity.

7. The method of claim 6, further comprising:
determining, based on the configuration, that a second subset of the plurality of architectural coverings is associated with a second space;
determining, based on the configuration and from the response, second proximity metrics that correspond to the second subset;
determining a second average proximity metric of the second space based on the first proximity metrics; and
presenting, at the user interface, an indication that the second space is within the connectivity range of the gateway based on the second average proximity
optionally further comprising:
generating an order of the first space and the second space based on the first average proximity metric and the second average proximity metric, wherein the indication that the first space is within the connectivity range and the indication that the second space is within the connectivity range are presented based on the order.

8. The method of claim 6, further comprising:
(i) determining, based on the configuration, that a second subset of the plurality of architectural coverings is associated with a second space;
determining, based on the configuration and from the response, second proximity metrics that correspond to the second subset;
determining a second average proximity metric of the second space based on the first proximity metrics; and
presenting, at the user interface, an indication that the second space is outside of the connectivity rang of the gateway based on the second average proximity; or
(ii) determining, based on the configuration, that a second subset of the plurality of architectural coverings is associated with a second space;
determining, based on the configuration, that the response excludes information about a proximity of the gateway with at least a second architectural covering of the second subset; and
presenting, at the user interface, an indication that the second space is outside of the connectivity rang of the gateway.

9. A device comprising:
one or more processors; and
one or more memories storing computer-readable instructions that, upon execution by the one or more processors, configure the device to:
determine a configuration of a plurality of architectural coverings located within a structure, wherein the configuration is associated with a structure identifier of the structure, and wherein the plurality of architectural coverings comprise a first architectural covering located within a space of the structure;
send, to a gateway, a request for proximity metrics, wherein the request comprises the structure identifier;
receive, from the gateway, a response to the request, wherein the response comprises a first proximity metric and a first architectural covering identifier of the first architectural covering, wherein the first proximity metric indicates a first proximity between the gateway and the first architectural covering; and
present an indication of the first proximity at a user interface of the device.

10. The device of claim 9, wherein the gateway is a first gateway, and wherein the execution of the computer-readable instructions further configure the device to:
present, at the user interface, a first field for inputting a first gateway identifier of the first gateway;
receive first user input at the first field, wherein the first user input indicates the first gateway identifier; and
send the first gateway identifier to the first gateway.

11. The device of claim 10, wherein the execution of the computer-readable instructions further configure the device to:
send, to a computer system, the structure identifier, the first gateway identifier, and the response;
receive, from the computer system, a control indication that the space and the first architectural covering are to be controlled via the first gateway; and
present the control indication at the user interface.

12. The device of claim 11, wherein the execution of the computer-readable instructions further configure the device to:
receive, from the computer system prior to sending the response, the configuration.

13. The device of claim 11, wherein the execution of the computer-readable instructions further configure the device to:
present, at the user interface, a second field for adding a second gateway within the structure;
receive second user input at the second field, wherein the second user input indicates that the second gateway is to be added;
present, at the user interface, a third field for inputting a second gateway identifier of the second gateway;
receive third user input at the third field, wherein the third user input indicates the second gateway identifier; and
send the second gateway identifier to the second gateway.

14. The device of claim 13, wherein the request, the response, and the space are a first request, a first response, and a first space, respectively, and wherein the execution of the computer-readable instructions further configure the device to:
send, to the second gateway, a second request for proximity metrics, wherein the second request comprises the structure identifier;
receive, from the second gateway, a second response to the second request;
send, to a computer system, the structure identifier, the first gateway identifier, the first response, the second gateway identifier, and the second response;
receive, from the computer system, a first control indication that the first space and the first architectural covering are to be controlled via the first gateway and a second control indication that a second space within the structure and a second architectural covering located within the second space are to be controlled via the second gateway; and
present the first control indication and the second control indication at the user interface,
optionally wherein the execution of the computer-readable instructions further configure the device to:
send, to the first gateway, the first control indication and at least a first portion of the configuration; and
send, to the second gateway, the second control indication and at least a second portion of the configuration.

15. One or more computer-readable media storing computer-readable instructions that, upon execution on a device, cause the device to perform operations comprising:
determining a configuration of a plurality of architectural coverings located within a structure, wherein the configuration is associated with a structure identifier of the structure, and wherein the plurality of architectural coverings comprise a first architectural covering located within a space of the structure;
sending, to a gateway, a request for proximity metrics, wherein the request comprises the structure identifier;
receiving, from the gateway, a response to the request, wherein the response comprises a first proximity metric and a first architectural covering identifier of the first architectural covering, wherein the first proximity metric indicates a first proximity between the gateway and the first architectural covering; and
presenting an indication of the first proximity at a user interface of the device.

## Patentansprüche

1. Verfahren, das von einer Vorrichtung implementiert wird, wobei das Verfahren Folgendes umfasst:
Bestimmen einer Konfiguration einer Mehrzahl von architektonischen Abdeckungen, die sich innerhalb eines Gebäude befinden, wobei die Konfiguration einer Gebäudekennung des Gebäudes zugeordnet ist und wobei die Mehrzahl von architektonischen Abdeckungen eine erste architektonische Abdeckung umfasst, die sich in einem Raum des Gebäudes befindet;
Senden einer Anfrage nach Nähemetriken an ein Gateway, wobei die Anfrage die Gebäudekennung umfasst;
Empfangen einer Antwort auf die Anfrage von dem Gateway, wobei die Antwort eine erste Nähemetrik und eine erste Kennung der architektonischen Abdeckung umfasst, wobei die erste Nähemetrik eine erste Nähe zwischen dem Gateway und der ersten architektonischen Abdeckung angibt; und
Anzeigen einer Angabe der ersten Annäherung auf einer Benutzeroberfläche der Vorrichtung.

2. Verfahren nach Anspruch 1, wobei die Antwort ferner eine zweite Nähemetrik und eine zweite Kennung der architektonischen Abdeckung einer zweiten architektonischen Abdeckung umfasst, wobei die zweite Nähemetrik eine zweite Nähe zwischen dem Gateway und der zweiten architektonischen Abdeckung angibt, wobei die Konfiguration angibt, dass sich die erste architektonische Abdeckung und die zweite architektonische Abdeckung innerhalb des Raums befinden, und wobei das Verfahren ferner umfasst:
Bestimmen einer dritten Nähemetrik zwischen dem Gateway und dem Raum auf Grundlage der ersten Nähemetrik und der zweiten Nähemetrik; und
Anzeigen einer Angabe der dritten Nähemetrik auf der Benutzeroberfläche,
optional ferner umfassend:
Anzeigen einer Angabe der zweiten Nähe auf der Benutzeroberfläche, wobei die Angabe der ersten Nähe und die Angabe der zweiten Nähe bei einer Auswahl des Raums auf der Benutzeroberfläche angezeigt werden und wobei der Raum, die erste architektonische Abdeckung und die zweite architektonische Abdeckung auf der Benutzeroberfläche auf Grundlage der Konfiguration identifiziert werden.

3. Verfahren nach Anspruch 1, wobei die erste Nähemetrik einen ersten durchschnittlichen Received Signal Strength Indicator (RSSI) umfasst, der auf Grundlage von Rundfunksignalen durch die erste architektonische Abdeckung bestimmt wird, und wobei die Antwort den durchschnittlichen RSSI und eine Zuordnung zwischen dem durchschnittlichen RSSI und der ersten Kennung der architektonischen Abdeckung umfasst.

4. Verfahren nach Anspruch 3, wobei die Antwort ferner einen zweiten durchschnittlichen RSSI und eine Zuordnung zwischen dem zweiten durchschnittlichen RSSI und einer zweiten Kennung der architektonischen Abdeckung einer zweiten architektonischen Abdeckung umfasst, und wobei das Verfahren ferner umfasst:
Bestimmen auf Grundlage der Konfiguration, dass sich die erste architektonische Abdeckung und die zweite architektonische Abdeckung innerhalb des Raums befinden;
Bestimmen einer Nähemetrik des Raums auf Grundlage des ersten durchschnittlichen RSSI und des zweiten durchschnittlichen RSSI;
Vergleichen der Nähemetrik des Raums mit einem Schwellenwert; und
Anzeigen auf der Benutzeroberfläche einer Angabe, dass sich der Raum auf der Grundlage des Vergleichs innerhalb des Konnektivitätsbereichs des Gateways befindet.

5. Verfahren nach Anspruch 4, ferner umfassend:
Bestimmen einer Teilmenge von architektonischen Abdeckungen aus der Mehrzahl der architektonischen Abdeckungen auf Grundlage der Konfiguration;
Bestimmen des kleinsten durchschnittlichen RSSI, der einer architektonischen Abdeckung der Teilmenge zugeordnet ist, auf Grundlage der Antwort; und
Vergleichen des kleinsten durchschnittlichen RSSI mit einem Schwellenwert-RSSI; und
Bestimmen, dass alle architektonischen Abdeckungen der Teilmenge mit dem Gateway verbunden sind, auf Grundlage des Vergleichs des kleinsten durchschnittlichen RSSI und des Schwellenwert-RSSI,
optional ferner umfassend:
Erzeugen einer Reihenfolge der architektonischen Abdeckungen der Teilmenge auf Grundlage von RSSI, die der Teilmenge entsprechen; und
Anzeigen von Näheangaben zwischen dem Gateway und den architektonischen Abdeckungen der Teilmenge auf der Benutzeroberfläche, wobei die Näheangaben auf Grundlage der Reihenfolge aufgelistet werden.

6. Verfahren nach Anspruch 1, wobei der Raum ein erster Raum ist und wobei das Verfahren ferner umfasst:
Bestimmen auf Grundlage der Konfiguration, dass eine erste Teilmenge der Mehrzahl von architektonischen Abdeckungen dem ersten Raum zugeordnet ist, wobei die erste Teilmenge die erste architektonische Abdeckung umfasst;
Bestimmen auf Grundlage der Konfiguration und der Antwort, von ersten Nähemetriken, die der ersten Teilmenge entsprechen, wobei die ersten Nähemetriken die erste Nähemetrik der ersten architektonischen Abdeckung umfassen;
Bestimmen einer ersten durchschnittlichen Nähemetrik des ersten Raums auf Grundlage der ersten Nähemetriken; und
Anzeigen auf der Benutzeroberfläche einer Angabe, dass sich der erste Raum auf der Grundlage der ersten durchschnittlichen Nähe innerhalb eines Konnektivitätsbereichs des Gateways befindet.

7. Verfahren nach Anspruch 6, ferner umfassend:
Bestimmen auf Grundlage der Konfiguration, dass eine zweite Teilmenge der Mehrzahl von architektonischen Abdeckungen einem zweiten Raum zugeordnet ist;
Bestimmen von zweiten Nähemetriken, die der zweiten Teilmenge entsprechen, auf Grundlage der Konfiguration und der Antwort;
Bestimmen einer zweiten durchschnittlichen Nähemetrik des zweiten Raums auf Grundlage der ersten Nähemetriken; und
Anzeigen auf der Benutzeroberfläche einer Angabe, dass sich der zweite Bereich innerhalb des Konnektivitätsbereichs des Gateways befindet, auf Grundlage der zweiten durchschnittlichen Nähe,
optional ferner umfassend:
Erzeugen einer Reihenfolge des ersten Raums und des zweiten Raums auf Grundlage der ersten durchschnittlichen Nähemetrik und der zweiten durchschnittlichen Nähemetrik, wobei die Angabe, dass sich der erste Raum innerhalb des Konnektivitätsbereichs befindet, und die Angabe, dass sich der zweite Raum innerhalb des Konnektivitätsbereichs befindet, auf Grundlage der Reihenfolge angegeben werden.

8. Verfahren nach Anspruch 6, ferner umfassend:
(i) Bestimmen auf Grundlage der Konfiguration, dass eine zweite Teilmenge der Mehrzahl von architektonischen Abdeckungen einem zweiten Raum zugeordnet ist;
Bestimmen von zweiten Nähemetriken, die der zweiten Teilmenge entsprechen, auf Grundlage der Konfiguration und der Antwort;
Bestimmen einer zweiten durchschnittlichen Nähemetrik des zweiten Raums auf Grundlage der ersten Nähemetriken; und
Anzeigen auf der Benutzeroberfläche einer Angabe, dass sich der zweite Bereich außerhalb des Konnektivitätsbereichs des Gateways befindet, auf Grundlage der zweiten durchschnittlichen Nähe; oder
(ii) Bestimmen auf Grundlage der Konfiguration, dass eine zweite Teilmenge der Mehrzahl von architektonischen Abdeckungen einem zweiten Raum zugeordnet ist;
Bestimmen auf Grundlage der Konfiguration, dass die Antwort keine Informationen über eine Nähe des Gateways zu wenigstens einer zweiten architektonischen Abdeckung der zweiten Teilmenge enthält; und
Anzeigen auf der Benutzeroberfläche einer Angabe, dass sich der zweite Bereich außerhalb der Reichweite des Gateways befindet.

9. Vorrichtung, die umfasst:
einen oder mehrere Prozessoren; und
ein oder mehrere Speicher, die computerlesbare Anweisungen speichern, die bei ihrer Ausführung durch den einen oder die mehreren Prozessoren die Vorrichtung konfigurieren, zum:
Bestimmen einer Konfiguration einer Mehrzahl von architektonischen Abdeckungen, die sich innerhalb eines Gebäude befinden, wobei die Konfiguration einer Gebäudekennung des Gebäudes zugeordnet ist und wobei die Mehrzahl von architektonischen Abdeckungen eine erste architektonische Abdeckung umfasst, die sich in einem Raum des Gebäudes befindet;
Senden einer Anfrage nach Nähemetriken an ein Gateway, wobei die Anfrage die Gebäudekennung umfasst;
Empfangen einer Antwort auf die Anfrage von dem Gateway, wobei die Antwort eine erste Nähemetrik und eine erste Kennung der architektonischen Abdeckung umfasst, wobei die erste Nähemetrik eine erste Nähe zwischen dem Gateway und der ersten architektonischen Abdeckung angibt; und
Anzeigen einer Angabe der ersten Annäherung auf einer Benutzeroberfläche der Vorrichtung.

10. Vorrichtung nach Anspruch 9, wobei das Gateway ein erstes Gateway ist und wobei die Ausführung der computerlesbaren Anweisungen die Vorrichtung ferner konfiguriert, zum:
Anzeigen auf der Benutzeroberfläche eines ersten Felds zum Eingeben einer ersten Gateway-Kennung des ersten Gateways;
Empfangen der ersten Benutzereingabe in dem ersten Feld, wobei die erste Benutzereingabe die erste Gateway-Kennung angibt; und
Senden der ersten Gateway-Kennung an das erste Gateway.

11. Vorrichtung nach Anspruch 10, wobei die Ausführung der computerlesbaren Anweisungen die Vorrichtung ferner konfiguriert, zum:
Senden an ein Computersystem der Gebäudekennung, der ersten Gateway-Kennung und der Antwort;
Empfangen von dem Computersystem einer Steuerangabe, dass der Raum und die erste architektonische Abdeckung über das erste Gateway gesteuert werden sollen; und
Anzeigen der Steuerangabe auf der Benutzeroberfläche.

12. Vorrichtung nach Anspruch 11, wobei die Ausführung der computerlesbaren Anweisungen die Vorrichtung ferner konfiguriert, zum:
Empfangen der Konfiguration von dem Computersystem vor dem Senden der Antwort.

13. Vorrichtung nach Anspruch 11, wobei die Ausführung der computerlesbaren Anweisungen die Vorrichtung ferner konfiguriert, zum:
Anzeigen auf der Benutzeroberfläche eines zweites Felds zum Hinzufügen eines zweiten Gateways innerhalb des Gebäudes;
Empfangen einer zweiten Benutzereingabe in dem zweiten Feld, wobei die zweite Benutzereingabe angibt, dass das zweite Gateway hinzugefügt werden soll;
Anzeigen auf der Benutzeroberfläche eines dritten Felds zum Eingeben einer zweiten Gateway-Kennung des zweiten Gateways;
Empfangen der dritten Benutzereingabe in dem dritten Feld, wobei die dritte Benutzereingabe die zweite Gateway-Kennung angibt; und
Senden der zweiten Gateway-Kennung an das zweite Gateway.

14. Vorrichtung nach Anspruch 13, wobei die Anfrage, die Antwort und der Raum eine erste Anfrage, eine erste Antwort und ein erster Raum sind und wobei die Ausführung der computerlesbaren Anweisungen die Vorrichtung ferner konfiguriert, zum:
Senden an das zweite Gateway einer zweiten Anfrage nach Nähemetriken, wobei die zweite Anfrage die Gebäudekennung umfasst;
Empfangen von dem zweiten Gateway einer zweiten Antwort auf die zweite Anfrage; Senden an ein Computersystem der Gebäudekennung, der ersten Gateway-Kennung, der ersten Antwort, der zweiten Gateway-Kennung und der zweiten Antwort;
Empfangen von dem Computersystem einer erste Steuerangabe, dass der erste Raum und die erste architektonische Abdeckung über das erste Gateway gesteuert werden sollen, und einer zweiten Steuerangabe, dass ein zweiter Raum innerhalb des Gebäudes und eine zweite architektonische Abdeckung, die sich in diesem zweiten Raum befindet, über das zweite Gateway gesteuert werden sollen; und
Anzeigen der ersten Steuerangabe und der zweiten Steuerangabe auf der Benutzeroberfläche,
optional, wobei die Ausführung der computerlesbaren Anweisungen die Vorrichtung ferner konfiguriert, zum:
Senden an das erste Gateway der ersten Steuerangabe und wenigstens eines ersten Abschnitts der Konfiguration; und
Senden an das zweite Gateway der zweiten Steuerangabe und wenigstens eines zweiten Abschnitts der Konfiguration.

15. Ein oder mehrere computerlesbare Speichermedien, die computerlesbare Anweisungen speichern, die bei ihrer Ausführung auf einer Vorrichtung bewirken, dass die Vorrichtung Vorgänge durchführt, die umfassen:
Bestimmen einer Konfiguration einer Mehrzahl von architektonischen Abdeckungen, die sich innerhalb eines Gebäude befinden, wobei die Konfiguration einer Gebäudekennung des Gebäudes zugeordnet ist und wobei die Mehrzahl von architektonischen Abdeckungen eine erste architektonische Abdeckung umfasst, die sich in einem Raum des Gebäudes befindet;
Senden einer Anfrage nach Nähemetriken an ein Gateway, wobei die Anfrage die Gebäudekennung umfasst;
Empfangen einer Antwort auf die Anfrage von dem Gateway, wobei die Antwort eine erste Nähemetrik und eine erste Kennung der architektonischen Abdeckung umfasst, wobei die erste Nähemetrik eine erste Nähe zwischen dem Gateway und der ersten architektonischen Abdeckung angibt; und
Anzeigen einer Angabe der ersten Annäherung auf einer Benutzeroberfläche der Vorrichtung.

## Revendications

1. Procédé mis en œuvre par un dispositif, le procédé comprenant :
la détermination d'une configuration d'une pluralité d'éléments d'habillage architecturaux faisant partie d'une structure, la configuration étant associée à un identifiant de la structure, et la pluralité d'éléments d'habillage architecturaux comprenant un premier élément d'habillage architectural situé au sein d'un espace de la structure ;
l'envoi, à une passerelle, d'une demande de mesures de proximité, la demande comprenant l'identifiant de la structure,
la réception, en provenance de la passerelle, d'une réponse à la demande, la réponse comprenant une première mesure de proximité et un premier identifiant d'élément d'habillage architectural correspondant au premier élément d'habillage architectural, la première mesure de proximité indiquant une première proximité entre la passerelle et le premier élément d'habillage architectural, et
l'affichage d'une indication de la première proximité sur une interface utilisateur du dispositif.

2. Procédé selon la revendication 1, dans lequel la réponse comprend en outre une deuxième mesure de proximité et un deuxième identifiant d'élément d'habillage architectural correspondant à un deuxième élément d'habillage architectural, la deuxième mesure de proximité indiquant une deuxième proximité entre la passerelle et le deuxième élément d'habillage architectural, la configuration indiquant que le premier élément d'habillage architectural et le deuxième élément d'habillage architectural sont situés au sein de l'espace, et le procédé comprenant en outre :
la détermination d'une troisième mesure de proximité entre la passerelle et ledit espace en fonction de la première et de la deuxième mesure de proximité, et
l'affichage d'une indication de la troisième mesure de proximité sur l'interface utilisateur ;
le procédé comprenant éventuellement en outre :
l'affichage d'une indication de la deuxième proximité sur l'interface utilisateur, l'indication de la première proximité et l'indication de la deuxième proximité étant affichées lors de la sélection de l'espace sur l'interface utilisateur, et l'espace, le premier élément d'habillage architectural et le deuxième élément d'habillage architectural étant identifiés sur l'interface utilisateur en fonction de la configuration.

3. Procédé selon la revendication 1, dans lequel la première mesure de proximité comprend un premier indicateur d'intensité de signal reçu (RSSI, received signal strength indicator) moyen déterminé en fonction de signaux de diffusion du premier élément d'habillage architectural, et la réponse comprend le RSSI moyen et une association entre le RSSI moyen et le premier identifiant d'élément d'habillage architectural.

4. Procédé selon la revendication 3, dans lequel la réponse comprend en outre un deuxième RSSI moyen et une association entre le deuxième RSSI moyen et un deuxième identifiant d'élément d'habillage architectural correspondant à un deuxième élément d'habillage architectural, le procédé comprenant en outre :
la détermination, en fonction de la configuration, que le premier élément d'habillage architectural et le deuxième élément d'habillage architectural sont situés au sein de l'espace,
la détermination d'une mesure de proximité de l'espace en fonction du premier RSSI moyen et du deuxième RSSI moyen,
la comparaison de la mesure de proximité de l'espace à une valeur seuil, et
l'affichage, sur l'interface utilisateur, d'une indication selon laquelle l'espace est situé à portée de connexion de la passerelle, en fonction de la comparaison.

5. Procédé selon la revendication 4, comprenant en outre :
la détermination, en fonction de la configuration, d'un sous-ensemble d'éléments d'habillage architecturaux parmi la pluralité d'éléments d'habillage architecturaux,
la détermination, à partir de la réponse, du RSSI moyen le plus bas associé à un élément d'habillage architectural du sous-ensemble, et
la comparaison du RSSI moyen le plus bas à un RSSI seuil, et
la détermination que tous les éléments d'habillage architecturaux du sous-ensemble sont connectés à la passerelle en fonction de la comparaison du RSSI moyen le plus bas au RSSI seuil ;
le procédé comprenant éventuellement en outre :
la génération d'un ordre des éléments d'habillage architecturaux du sous-ensemble en fonction des RSSI qui correspondent au sous-ensemble, et
l'affichage, sur l'interface utilisateur, d'indications de proximité entre la passerelle et les éléments d'habillage architecturaux du sous-ensemble, les indications de proximité étant répertoriées selon cet ordre.

6. Procédé selon la revendication 1, dans lequel l'espace est un premier espace, le procédé comprenant en outre :
la détermination, en fonction de la configuration, qu'un premier sous-ensemble de la pluralité d'éléments d'habillage architecturaux est associé au premier espace, le premier sous-ensemble comprenant le premier élément d'habillage architectural,
la détermination, en fonction de la configuration et à partir de la réponse, de premières mesures de proximité correspondant au premier sous-ensemble, les premières mesures de proximité comprenant la première mesure de proximité du premier élément d'habillage architectural,
la détermination d'une première mesure de proximité moyenne du premier espace en fonction des premières mesures de proximité, et
l'affichage, sur l'interface utilisateur, d'une indication selon laquelle le premier espace est situé à portée de connexion de la passerelle, en fonction de la première mesure de proximité moyenne.

7. Procédé selon la revendication 6, comprenant en outre :
la détermination, en fonction de la configuration, qu'un deuxième sous-ensemble de la pluralité d'éléments d'habillage architecturaux est associé à un deuxième espace,
la détermination, en fonction de la configuration et à partir de la réponse, de deuxièmes mesures de proximité correspondant au deuxième sous-ensemble,
la détermination d'une deuxième mesure de proximité moyenne du deuxième espace en fonction des premières mesures de proximité, et
l'affichage, sur l'interface utilisateur, d'une indication selon laquelle le deuxième espace est situé à portée de connexion de la passerelle, en fonction de la deuxième proximité moyenne,
le procédé comprenant éventuellement en outre :
la génération d'un ordre du premier espace et du deuxième espace en fonction de la première mesure de proximité moyenne et de la deuxième mesure de proximité moyenne, l'indication selon laquelle le premier espace est situé à portée de connexion et l'indication selon laquelle le deuxième espace est situé à portée de connexion étant affichées en fonction de cet ordre.

8. Procédé selon la revendication 6, comprenant en outre :
(i) la détermination, en fonction de la configuration, qu'un deuxième sous-ensemble de la pluralité d'éléments d'habillage architecturaux est associé à un deuxième espace,
la détermination, en fonction de la configuration et à partir de la réponse, de deuxièmes mesures de proximité correspondant au deuxième sous-ensemble,
la détermination d'une deuxième mesure de proximité moyenne du deuxième espace en fonction des premières mesures de proximité, et
l'affichage, sur l'interface utilisateur, d'une indication selon laquelle le deuxième espace est situé hors de portée de connexion de la passerelle, en fonction de la deuxième proximité moyenne, ou
(ii) la détermination, en fonction de la configuration, qu'un deuxième sous-ensemble de la pluralité d'éléments d'habillage architecturaux est associé à un deuxième espace,
la détermination, en fonction de la configuration, que la réponse exclut toute information concernant la proximité de la passerelle avec au moins un deuxième élément d'habillage architectural du deuxième sous-ensemble, et
l'affichage, sur l'interface utilisateur, d'une indication selon laquelle le deuxième espace est situé hors de portée de connexion de la passerelle.

9. Dispositif comprenant :
un ou plusieurs processeurs, et
une ou plusieurs mémoires dans lesquelles sont stockées des instructions lisibles par ordinateur qui, lors de leur exécution par le ou les processeurs, configurent le dispositif de façon à :
déterminer une configuration d'une pluralité d'éléments d'habillage architecturaux situés au sein d'une structure, la configuration étant associée à un identifiant de la structure, et la pluralité d'éléments d'habillage architecturaux comprenant un premier élément d'habillage architectural situé au sein d'un espace de la structure ;
envoyer, à une passerelle, une demande de mesures de proximité, la demande comprenant l'identifiant de la structure,
recevoir, en provenance de la passerelle, une réponse à la demande, la réponse comprenant une première mesure de proximité et un premier identifiant d'élément d'habillage architectural correspondant au premier élément d'habillage architectural, la première mesure de proximité indiquant une première proximité entre la passerelle et le premier élément d'habillage architectural, et
afficher une indication de la première proximité sur une interface utilisateur du dispositif.

10. Dispositif selon la revendication 9, dans lequel la passerelle est une première passerelle, et l'exécution des instructions lisibles par ordinateur configurant en outre le dispositif de façon à :
afficher, sur l'interface utilisateur, un premier champ destiné à l'entrée d'un premier identifiant de passerelle correspondant à la première passerelle,
recevoir une première entrée utilisateur dans le premier champ, la première entrée utilisateur indiquant le premier identifiant de passerelle, et
envoyer le premier identifiant de passerelle à la première passerelle.

11. Dispositif selon la revendication 10, dans lequel l'exécution des instructions lisibles par ordinateur configure en outre le dispositif de façon à :
envoyer, à un système informatique, l'identifiant de la structure, le premier identifiant de passerelle et la réponse,
recevoir, en provenance du système informatique, une indication de commande selon laquelle l'espace et le premier élément d'habillage architectural doivent être commandés par la première passerelle, et
afficher l'indication de commande sur l'interface utilisateur.

12. Dispositif selon la revendication 11, dans lequel l'exécution des instructions lisibles par ordinateur configure en outre le dispositif de façon à :
recevoir la configuration en provenance du système informatique avant l'envoi de la réponse.

13. Dispositif selon la revendication 11, dans lequel l'exécution des instructions lisibles par ordinateur configure en outre le dispositif de façon à :
afficher, sur l'interface utilisateur, un deuxième champ permettant d'ajouter une deuxième passerelle au sein de la structure,
recevoir une deuxième entrée utilisateur dans le deuxième champ, la deuxième entrée utilisateur indiquant que la deuxième passerelle doit être ajoutée,
afficher, sur l'interface utilisateur, un troisième champ destiné à l'entrée d'un deuxième identifiant de passerelle correspondant à la deuxième passerelle,
recevoir une troisième entrée utilisateur dans le troisième champ, la troisième entrée utilisateur indiquant le deuxième identifiant de passerelle, et
envoyer le deuxième identifiant de passerelle à la deuxième passerelle.

14. Dispositif selon la revendication 13, dans lequel la demande, la réponse et l'espace sont respectivement une première demande, une première réponse et un premier espace, et l'exécution des instructions lisibles par ordinateur configure en outre le dispositif de façon à :
envoyer, à la deuxième passerelle, une deuxième demande de mesures de proximité, la deuxième demande comprenant l'identifiant de la structure,
recevoir, en provenance de la deuxième passerelle, une deuxième réponse à la deuxième demande,
envoyer, à un système informatique, l'identifiant de la structure, l'identifiant de première passerelle, la première réponse, l'identifiant de deuxième passerelle et la deuxième réponse,
recevoir, en provenance du système informatique, une première indication de commande selon laquelle le premier espace et le premier élément d'habillage architectural doivent être commandés par la première passerelle, et une deuxième indication de commande selon laquelle un deuxième espace au sein de la structure et un deuxième élément d'habillage architectural situé au sein du deuxième espace doivent être commandés par la deuxième passerelle, et
afficher la première indication de commande et la deuxième indication de commande sur l'interface utilisateur ;
l'exécution des instructions lisibles par ordinateur configurant éventuellement en outre le dispositif de façon à :
envoyer, à la première passerelle, la première indication de commande et au moins une première portion de la configuration, et
envoyer, à la deuxième passerelle, la deuxième indication de commande et au moins une deuxième portion de la configuration.

15. Un ou plusieurs supports lisibles par ordinateur sur lesquels sont stockés des instructions lisibles par ordinateur qui, lors de leur exécution sur un dispositif, amènent le dispositif à réaliser des opérations comprenant :
la détermination d'une configuration d'une pluralité d'éléments d'habillage architecturaux situés au sein d'une structure, la configuration étant associée à un identifiant de la structure, et la pluralité d'éléments d'habillage architecturaux comprenant un premier élément d'habillage architectural situé au sein d'un espace de la structure ;
l'envoi, à une passerelle, d'une demande de mesures de proximité, la demande comprenant l'identifiant de la structure,
la réception, en provenance de la passerelle, d'une réponse à la demande, la réponse comprenant une première mesure de proximité et un premier identifiant d'élément d'habillage architectural correspondant au premier élément d'habillage architectural, la première mesure de proximité indiquant une première proximité entre la passerelle et le premier élément d'habillage architectural, et
l'affichage d'une indication de la première proximité sur une interface utilisateur du dispositif.
